# EUROPÄISCHE PATENTSCHRIFT

(11) **EP 2 274 524 B1**
(45) Veröffentlichungstag und Bekanntmachung des Hinweises auf die Patenterteilung: **19.11.2014**
(21) Anmeldenummer: 09726760.3
(22) Anmeldetag: 28.03.2009
(51) Int. Cl.: F16C 33/36, F16C 33/54, F16C 33/66, F16C 43/06, F16C 33/46

(54) **KUGELROLLENLAGER SOWIE VERFAHREN ZUR MONTAGE EINES SOLCHEN KUGELROLLENLAGERS**
BALL ROLLER BEARING AND METHOD FOR THE INSTALLATION OF SUCH A BALL ROLLER BEARING
ROULEMENT À ROULEAUX SPHÉRIQUES ET PROCÉDÉ DE MONTAGE DE CELUI-CI

(30) Priorität: 03.04.2008 DE 102008016977
(43) Veröffentlichungstag der Anmeldung: 19.01.2011
(73) Patentinhaber: Schaeffler Technologies GmbH & Co. KG, 91074 Herzogenaurach (DE)
(72) Erfinder: DÖPPLING, Horst, 91074 Herzogenaurach (DE); GEIGER, Ernst, 91352 Hallerndorf (DE); HOFMANN, Heinrich, 97422 Schweinfurt (DE); WIRTH, Werner, 91466 Gerhardshofen (DE)
(86) Internationale Anmeldenummer: PCT/EP2009/002286
(87) Internationale Veröffentlichungsnummer: WO 2009/121533

(56) Entgegenhaltungen:
- DE-A1-102005 014 556
- DE-A1-102006 019 228

## Beschreibung

### Gebiet der Erfindung

Die Erfindung betrifft ein Kugelrollenlager mit den Merkmalen des Oberbegriffs des Patentanspruchs 1 sowie ein Verfahren zur Montage eines solchen Kugelrollenlagers, welches beispielsweise besonders vorteilhaft als Festlager für die An- und Abtriebswelle eines Kfz-Schaltgetriebes einsetzbar ist.

### Hintergrund der Erfindung

In der Wälzlagertechnik ist es allgemein bekannt, dass Rillenkugellager starre, nicht zerlegbare Radialwälzlager sind, die sich vor allem durch eine gleichermaßen hohe radiale und axiale Tragfähigkeit auszeichnen und wegen ihrer geringen Reibung die höchsten Drehzahlgrenzen aller Lagerarten aufweisen. Diese Rillenkugellager bestehen im Wesentlichen aus einem äußeren Lagerring und einem inneren Lagerring sowie aus einer Anzahl zwischen den Lagerringen angeordneten Kugeln als Wälzkörpern, die auf in die Innenseite des äußeren Lagerrings und in die Außenseite des inneren Lagerrings eingearbeitete rillen-förmigen Kugellaufbahnen abrollen und durch einen Lagerkäfig in gleichmäßigen Abständen zueinander geführt werden. Das Befüllen von Radialkugellagern mit den Kugeln erfolgt dabei durch das mit der DE 168 499 bekannt gewordene Exzentermontageverfahren, bei dem die beiden Lagerringe exzentrisch zueinander angeordnet werden und der dadurch entstehende sichelförmige freie Raum zwischen den Lagerringen mit den Kugeln befüllt wird.

In der Praxis hat es sich jedoch erwiesen, dass derartigen Rillenkugellagern aufgrund der geringen maximal einbaubaren Anzahl von Kugeln bzw. des geringen maximalen Füllgrades von ca. 60% in Bezug auf die Tragfähigkeit des Lagers dennoch Grenzen gesetzt sind. In der Vergangenheit wurden daher eine Vielzahl von Lösungen, wie beispielsweise eine in den sich gegenüberliegenden Borden des äußeren und des inneren Lagerrings angeordnete unverschlossene Einfüllöffnung gemäß DE 151 483 oder eine ähnlich ausgebildete verschließbare Einfüllöffnung gemäß DE 24 07 477 A1, vorgeschlagen, mit denen durch eine Erhöhung der Anzahl der Kugeln eine Erhöhung des Füllgrades und damit der Tragfähigkeit von Rillenkugellagern erreicht werden sollte. Solche Einfollöffnungen haben jedoch sowohl in der unverschlossenen als auch in der verschlossenen Ausführung den Nachteil, dass es durch deren keilförmige Einmündung in die Laufbahnen der Kugeln oder durch Grate zu einem "Hängen bleiben" oder Verklemmen der Wälzkörper an dieser Einfüllöffnung kommen kann, so dass sich derartige Lösungen in der Praxis nicht durchsetzen konnten.

Eine andere Möglichkeit, die Anzahl der Wälzkörper an einem Radialwälzlager zu erhöhen, ist darüber hinaus durch die DE 43 34 195 A1 bekannt geworden. Bei diesem, an sich als einreihiges Rillenkugellager ausgebildeten Radialwälzlager werden die Wälzkörper jedoch nicht durch Kugeln sondern durch so genannte Kugelrollen gebildet, die mit zwei symmetrisch von einer Kugelgrundform abgeflachten sowie parallel zueinander angeordneten Seitenflächen ausgebildet sind. Die Breite dieser Kugelrollen zwischen deren Seitenflächen ist dabei kleiner als der Abstand zwischen der Innenseite des äußeren Lagerrings und Außenseite des inneren Lagerrings ausgebildet, so dass das Befüllen des Lagers mit den Kugelrollen im so genannten Axialmontageverfahren erfolgen kann, bei dem die Kugelrollen quasi liegend axial durch den Abstand zwischen dem inneren und dem äußeren Lagerring in das Lager eingeführt werden können. Wenn sich der Mittelpunkt der Kugelrollen dann auf der Höhe der Wälzkörperlaufbahnachse befindet, werden die Kugelscheiben um 90° gedreht, so dass sie mit ihren Kugellaufflächen in den Wälzkörperlaufbahnen abrollen können.

Trotz der Möglichkeit, diese speziell ausgebildeten Kugelrollen axial in das Lager einzusetzen und das Radialwälzlager dadurch mit einer hohen Anzahl an Wälzkörpern ausfüllen zu können, stellt ein solches Radialwälzlager im Hinblick auf die angestrebte Erhöhung der Tragfähigkeit des Lagers jedoch allenfalls nur einen Kompromiss dar. Dies ist in der Tatsache begründet, dass die Kugel-rollen wegen ihrer axialen Einführbarkeit in das Lager nur mit einer entsprechend kleinen Breite zwischen ihren Seitenflächen ausgebildet werden können, um problemlos durch den Abstand zwischen innerem und äußerem Lagerring in das Lager eingeführt werden zu können. Ebenso können die Wälzkörperlaufbahnen in den Lagerringen nur relativ flach und schmal ausgebildet werden, um das Drehen der Wälzkörper in ihre Betriebslage ermöglichen zu können, ohne dass in dieser Betriebslage ein zu hohes Radialspiel im gesamten Lager entsteht. Die relativ schmalen Kugelrollen und die flachen Wälzkörperlaufbahnen bewirken jedoch eine relativ kleine Kontaktfläche der Kugelrollen zu ihren Wälzkörperlaufbahnen, so dass sich sowohl die axiale als auch die radiale Tragfähigkeit eines solchen Radiallagers wieder verringert und der ursprüngliche Vorteil der erhöhten Anzahl von Wälzkörpern nahezu kompensiert wird.

Zur Vermeidung dieser Nachteile wurde es deshalb durch die DE 10 2005 014 556 A1 vorgeschlagen, die Breite der Kugelrollen zwischen deren Seitenflächen auf mindestens 70% des Durchmessers ihrer Kugelgrundform zu vergrößern und die rillenförmigen Laufbahnen in den Lagerringen mit einer Tiefe von etwa 19% sowie einer Breite von etwa 75% des Durchmessers der Kugelgrundform der Kugelrollen auszubilden, da damit eine Gesamtkontaktfläche der Kugelrollen zu ihren Laufbahnen von etwa 45% des Umfangs der Kugelgrundform der Kugelrollen entsteht, die auch die Kugeln herkömmlicher Rillenkugellager zu ihren Laufbahnen in den Lagerringen aufweisen. Da der Abstand zwischen der Außenseite des inneren Lagerrings und der Innenseite des äußeren Lagerrings sich dadurch jedoch auf etwa 60% des Durchmessers der Kugelgrundform der Kugelrollen verringert und somit kleiner als die Breite der Kugelrollen ist, wurde deren Einsetzen in das Radialwälzlager wieder durch das Exzentermontagever-fahren realisiert, bei dem die Kugelrollen mit ihren Seitenflächen aneinander anliegend in den freien Raum zwischen den beiden exzentrisch zueinander angeordneten Lagerringen quer in die Laufbahnen eingelegt werden, anschlie-ßend der innere Lagerring in die zum äußeren Lagerring konzentrische Stellung gebracht wird und abschließend die Kugelrollen auf dem Teilkreis ihrer Laufbahnen mit gleichmäßigem Abstand zueinander verteilt und um 90° ver-schwenkt werden. Die abgeflachten Seitenflächen der Kugelrollen ermöglichten es dabei, dass auch mit dem Exzentermontageverfahren eine gegenüber einreihigen Rillenkugellagern erhöhte Anzahl an Wälzkörpern mit einem Füllgrad von etwa 73% in das Kugelrollenlager einfüllbar ist.

Mit einem derart ausgebildeten Kugelrollenlager wurde zwar erreicht, dass die Kugelrollen ähnlich wie die Kugeln eines Rillenkugellagers große Kontaktflä-chen zu ihren Laufbahnen in den Lagerringen aufweisen und dass das Kugelrollenlager mit einer höheren Anzahl an Wälzkörpern bzw. mit einem höheren Füllgrad als herkömmliche einreihige Rillenkugellager bestückt werden kann, dennoch mussten bedingt durch das Exzentermontageverfahren hinsichtlich der Anzahl der Wälzkörper Abstriche gegenüber der im Axialmontageverfahren möglichen höheren Wälzkörperanzahl gemacht werden. Somit konnte gegen-über herkömmlichen Rillenkugellagern zwar der axiale Bauraum und das Gewicht des Kugelrollenlagers verringert und dessen Axialbelastbarkeit erhöht werden, die Erhöhung der radialen Tragfähigkeit des Kugelrollenlagers fiel jedoch vergleichsweise gering aus.

### Aufgabe der Erfindung

Ausgehend von den dargelegten Nachteilen der Lösungen des bekannten Standes der Technik liegt der Erfindung deshalb die Aufgabe zu Grunde, ein Kugelrollenlager zu konzipieren, welches bei ähnlichen Laufbahnabmessungen wie ein vergleichbares Rillenkugellager mit einer wesentlich höheren Anzahl an Kugelrollen befüllt werden kann uns sich dadurch vor allem durch eine höhere radiale Tragfähigkeit und durch eine gesteigerte Lebensdauer auszeichnet.

### Beschreibung der Erfindung

Erfindungsgemäß wird diese Aufgabe bei einem Kugelrollenlager mit den Merkmalen des Oberbegriff des Anspruchs 1 zum einen dadurch gelöst, dass der Lagerkäfig des Kugelrollenlagers als Fensterkäfig ausgebildet ist, dessen einzelne Käfigtaschen jeweils die integrierte Gesamtkontur einer längs und einer quer zur Umfangsrichtung angeordneten Kontur eines Querschnittes durch eine in senkrechter Rollstellung angeordnete Kugelrolle aufweisen und derart zueinander beabstandet angeordnet sind, dass die Summe der Abstände der eingefüllten Kugelrollen auf deren Teilkreis kleiner als der Durchmesser der Kugelgrundform einer einzelnen Kugelrolle ist, wobei die längs zur Umfangsrichtung angeordnete Kontur der Käfigtaschen die Form einer oberhalb der Mittelquerachse einer Kugelrolle angeordneten Schnittebene und die quer zur Umfangsrichtung angeordnete Kontur der Käfigtaschen die Form einer direkt auf der Mittelquerachse einer Kugelrolle angeordneten Schnittebene aufweist.

Der Erfindung liegt somit die Erkenntnis zu Grunde, dass mit einem derart ausgebildeten Lagerkäfig in einfacher und kostengünstiger Weise die Voraussetzungen dafür geschaffen werden können, dass ein Kugelrollenlager mit ähnlichen Laufbahnabmessungen wie ein vergleichbares Rillenkugellager mit einer wesentlich höheren Anzahl an Kugelrollen befüllt und dadurch vor allem mit einer höheren radialen Tragfähigkeit und mit einer wesentlich gesteigerten Lebensdauer ausgebildet werden kann.

Bevorzugte Ausgestaltungen und vorteilhafte Weiterbildungen des erfindungsgemäßen Kugelrollenlagers werden in den Unteransprüchen beschrieben.

Danach ist es gemäß Anspruch 2 vorgesehen, dass die Tiefe der rillenförmigen Laufbahnen in beiden Lagerringen gleich ist und ca. 17% bis 25% des Durchmessers der Kugelgrundform der Kugelrollen beträgt. Die Ausbildung der Laufbahnen mit einer derartigen Rillentiefe entspricht dabei den bei herkömmlichen Rillenkugellagern bewährten Erfahrungswerten und gewährleistet, dass die Kugelrollen abhängig von der Radiallagerluft auch bei einer zulässigen Schiefstellung des Lagers aus der Mittellage einen hohen Schmiegungsgrad zu ihren Laufbahnen aufweisen und das Lager somit die volle Tragfähigkeit behält.

Alternativ zu der Ausbildung gemäß Anspruch 2 wird es durch Anspruch 3 vorgeschlagen, dass die Tiefe der rillenförmigen Laufbahnen in beiden Lagerringen unterschiedlich ist und im äußeren Lagerring ca. 17% sowie im inneren Lagerring bis zu 30% des Durchmessers der Kugelgrundform der Kugelrollen beträgt. Die Ausbildung der Laufbahnen mit solchen Rillentiefen gewährleistet ebenfalls einen hohen Schmiegungsgrad der Kugelrollen zu ihren Laufbahnen, hat sich jedoch, wie nachfolgend noch beschrieben wird, vor allem im Hinblick auf eine erleichterte Montage des Kugelrollenlagers als besonders vorteilhaft erwiesen.

Nach Anspruch 4 ist es ein weiteres Merkmal des erfindungsgemäßen Kugelrollenlagers, dass der Lagerkäfig zunächst einen U-förmigen Profilquerschnitt aufweist, dessen seitliche Profilschenkel als Käfigborde zur Vermeidung eines Quertaumelns der Kugelrollen vorgesehen sind. Gemäß Anspruch 5 weisen die Käfigborde dabei eine solche Länge auf, dass deren Endkanten nach einem die Lagermontage abschließenden Einbördeln zu den Kugelrollen hin etwa auf Höhe des Teilkreises des Kugelrollenlagers angeordnet sind aber nicht mit den Kugelrollen in Kontakt stehen. Die somit durch die Käfigborde gebildete axiale Führung der Kugelrollen hat sich dabei deshalb als vorteilhaft erwiesen, da die Kugelrollen bei höheren Drehzahlen und gleichmäßiger Last aufgrund des eintretenden Kreiseleffektes zwar ohne Schränkbewegungen stabil in ihren Laufbahnen laufen und keine axiale Führung durch einen Lagerkäfig benötigen, aber beim Lageranlauf bzw. bei einer Lagerdrehzahl unterhalb einer zulässigen Mindestdrehzahl oder bei ruckartiger hoher Beschleunigung insbesondere in der lastfreien Zone des Lagers einen so genannten Taumeleftekt aufweisen, bei dem die Kugelrollen dazu neigen, in ihren Laufbahnen quer zur Laufrichtung wellenförmig abzurollen. Gleichzeitig gestattet eine solche Ausbildung der Käfigborde eine selbsttätige Druckwinkeleinstellung der Kugelrollen innerhalb ihrer Laufbahnen von bis zu ± 25°, so dass das Kugelrollenlager innerhalb definierter Grenzen auch relativ hoch axial belastbar ist.

Als vorteilhafte Ausgestaltung des erfindungsgemäß ausgebildeten Kugelrollenlagers wird es durch Anspruch 6 desweiteren noch vorgeschlagen, dass der Lagerkäfig spanlos aus einem Blechband hergestellt ist, an welches zunächst die Käfigborde durch Umformen anprofiliert werden. In das umgeformte Blechband werden dann durch Stanzen die einzelnen Käfigtaschen eingearbeitet und anschließend erfolgt das Ablängen des Blechbandes in einzelne Blechstreifen mit der Länge des Umfangsmaßes des Lagerkäfigs. Danach werden die einzelnen Blechstreifen zu einem Ring eingerollt und abschließend deren beide Ringenden miteinander verschweißt. Eine solche Herstellungsweise ist beispielsweise aus der Nadelhülsenfertigung bekannt und hat sich aufgrund der günstigen Herstellungskosten auch für die Fertigung des Lagerkäfigs des erfindungsgemäßen Kugelrollenlagers als besonders geeignet erwiesen.

Gemäß Anspruch 7 zeichnet sich das erfindungsgemäß ausgebildete Kugelrollenlager schließlich noch dadurch aus, dass es im montierten Zustand einen Wälzkörperfüllgrad von etwa 85% bis 95% aufweist. Am Beispiel eines Rillenkugellagers nach DIN/ISO 6207, welches mit maximal 9 Lagerkugeln befüllbar ist und somit einen Füllgrad von ca. 60% aufweist, bedeutet dies, dass ein baugleich ausgebildetes erfindungsgemäßes Kugelrollenlager demgegenüber mit 14 Kugelrollen befüllt werden kann. Dadurch steigt dessen Tragfähigkeit auf etwa das 1,4-fache eines baugleichen Rillenkugellagers an, so dass dessen Lebensdauer, ausgehend von einer Lebensdauer von 100% für das baugleiche Rillenkugellager, etwa 180% bis 240 % beträgt. Der entscheidende Vorteil eines erfindungsgemäßen Kugelrollenlagers gegenüber den aus dem Stand der Technik bekannten Kugelrollenlagern ist somit darin zu sehen, dass es trotz tief ausgebildeter Laufbahnen in den Lagerringen, durch die eine hohe Axialbelastbarkeit des Kugelrollenagers gewährleistet ist, und trotz eines dadurch kleiner als die Breite der Kugelrollen ausgebildeten Abstandes zwischen den Lagerringen einen Füllgrad aufweist, der bisher nur mit im Axialmontageverfahren montierten Kugelrollenlagern erreichbar war, bei denen die Kugelrollen wesentlich schmaler ausgebildet sind sowie auf wesentlich flacheren Laufbahnen abrollen und bei denen der Abstand zwischen den Lagerringen größer als die Breite der Kugelrollen ist.

Die Aufgabe der Erfindung wird bei einem Kugelrollenlager mit den Merkmalen des Oberbegriff des Anspruchs 1 zum Anderen auch durch ein Verfahren zur Montage eines Kugelrollenlager gemäß Anspruch 8 gelöst, welches als Kreuz-Schräg-Schwenkmontage zwischen dem inneren Lagerring, dem Lagerkäfig und den Kugelrollen sowie dem äußeren Lagerring ausgebildet ist.

Nach diesem Verfahren beginnt die Lagermontage im ersten Montageschritt zunächst damit, dass der innere Lagerring und der Lagerkäfig des Kugelrollenlagers auf einer zumindest annähernd gemeinsamen Ebene in konzentrischer Stellung zueinander angeordnet und die Kugelrollen im zweiten Montageschritt in einer um 90° zu deren Betriebstellung verdrehten Stellung durch die Käfigtaschen des Lagerkäfigs hindurch in die Laufbahn des inneren Lagerrings eingefügt werden. Nach Anspruch 11 erfolgt dieses Einfügen der Kugelrollen in die Laufbahn des inneren Lagerrings dabei ausschließlich durch die quer zur Umfangsrichtung angeordnete Querschnittskontur der Käfigtaschen, die nur zu diesem Zweck in den Lagerkäfig eingearbeitet ist.

Danach erfolgt im dritten Montageschritt ein Verschwenken der Kugelrollen innerhalb ihrer Käfigtaschen um deren Querachse um 90° in eine liegende Stellung derart, dass deren Seitenflächen parallel zur Lagerlängsachse angeordnet sind bzw. eine ihrer Seitenflächen direkt in der Laufbahn des inneren Lagerrings liegt. Gemäß Anspruch 12 ist dabei die Querachse, um welche die Kugelrollen verschwenkt werden, unterhalb der Ebene der Unterseite des Lagerkäfigs angeordnet, so dass die nach außen weisenden Seitenflächen der dann liegenden und nun auch die längs zur Umfangsrichtung angeordnete Querschnittskontur der Käfigtaschen ausfüllenden Kugelrollen in für das weitere Verfahren vorteilhafter Weise nur noch geringfügig oberhalb der Oberseite des Lagerkäfigs angeordnet sind.

Nach dem Verschwenken der Kugelrollen in die beschriebene liegende Stellung erfolgt dann als vierter Montageschritt das Ineinanderfügen von äußerem Lagerring und innerem Lagerrings mit Lagerkäfig und Kugelrollen in einer zumindest annähernd um 90° verdrehten Stellung der Lagerringe zueinander sowie als fünfter Montageschritt das Zueinanderschwenkern von äußerem Lagerring und innerem Lagerring mit Lagerkäfig und Kugelrollen um deren gemeinsame Lagerquerachse, bis beide Lagerringe koaxial zueinander angeordnet sind.

Bei einem Kugelrollenlager mit gleicher Rillentiefe der Laufbahnen im äußeren und inneren Lagerring erfolgen diese Verfahrensschritte gemäß Anspruch 9 in konkreter Ausführung derart, dass zunächst der äußere Lagerring in einer senkrechten Stellung in einer Hilfsvorrichtung fixiert und dann der innere Lagerring zusammen mit dem Lagerkäfig und den Kugelrollen in einer waagerechten Stellung in den äußeren Lagerring eingesetzt wird. Das bedeutet, dass der innere Lagerring mit dem Lagerkäfig und den Kugelrollen in einer zum äußeren Lagerring gekreuzten Stellung geradlinig in den äußeren Lagerring eingeschoben wird, wobei gemäß Anspruch 13 zunächst nur zwei diametral gegenüberliegend angeordnete Kugelrollen mit der Laufbahn des äußeren Lagerrings in Kontakt treten.

In Vorbereitung des Zueinanderschwenkens von äußerem Lagerring und inneren Lagerring erfolgt dann ein entgegengesetztes Verkippen der einerseits und der andererseits des äußeren Lagerrings angeordneten Kugelrollen in der Art, dass diese innerhalb der Laufbahn des inneren Lagerrings zu einer der Seitenflächen des inneren Lagerrings in eine schräge Stellung angestellt werden. Bei der beschriebenen Stellung der Lagerringe zueinander bedeutet dies, dass das schräge Anstellen der Kugelrollen zur linken bzw. zur rechten Seitenfläche des inneren Lagerrings hin erfolgt, wobei gemäß Anspruch 14 die verkippten Kugelrollen auf ihrer abgesenkten Seite dann etwa auf der Ebene der Oberseite des Lagerkäfigs angeordnet sind.

Danach folgt dann das Verschwenken des inneren Lagerrings zusammen mit dem Lagerkäfig und den Kugelrollen zum äußeren Lagerring, wobei die Seitenflächen des inneren Lagerrings, zu denen die Kugelrollen angestellt sind, jeweils in Schwenkrichtung voran angeordnet sind. Vor dem endgültigen Eintauchen des inneren Lagerrings mit dem Lagerkäfig und den Kugelrollen in den äußeren Lagerring wird noch ein geringer radialer Versatzes des inneren Lagerrings zum äußeren Lagerrings hergestellt, um das Einschwenken des der Versatzrichtung entgegengesetzten Teils des inneren Lagerrings zusammen mit dem Lagerkäfig und den Kugelrollen in den äußeren Lagerring zu erleichtern. Dieser radiale Versatz erfolgt dabei gemäß Anspruch 15 durch leichtes Anheben des inneren Lagerrings in Richtung eines der noch außerhalb des äußeren Lagerrings befindlichen Teile des inneren Lagerrings, also bevorzugt nach oben, um den unteren Teil des inneren Lagerrings in den äußeren Lagerring einzuschwenken. Um auch den verbleibenden Teils des inneren Lagerrings zusammen mit dem Lagerkäfig und den Kugelrollen in den äußeren Lagerring einschwenken zu können erfolgt dann das Absenken des bereits eingeschwenkten Teils des inneren Lagerrings in den äußeren Lagerring, so dass auch dieser Montageschritt erleichtert wird. Das Absenken des bereits eingeschwenkten Teils des inneren Lagerrings in den äußeren Lagerring erfolgt dabei nach Anspruch 16 entgegensetzt der Richtung des noch nicht in Endstellung befindlichen Teils des inneren Lagerrings, also bevorzugt nach unten, um letztlich auch den oberen Teil des inneren Lagerrings in den äußeren Lagerring einzuschwenken.

Bei einem Kugelrollenlager mit unterschiedlichen Rillentiefen in den Lagerringen bzw. mit kleinerer Rillentiefe der Laufbahn im äußeren Lagerring und größerer Rillentiefe der Laufbahn im inneren Lagerring können die Verfahrensschritte 4 und 5 gemäß Anspruch 10 jedoch wesentlich einfacher in der Art erfolgen, dass zunächst der innere Lagerring mit Lagerkäfig und Kugelrollen in einer waagerechten Stellung in einer Hilfsvorrichtung fixiert und dann der äußeren Lagerring in einer senkrechten Stellung auf den inneren Lagerring aufgeschoben wird. Ebenso wie bei der vorbeschriebenen Variante treten auch hierbei gemäß Anspruch 13 zunächst nur zwei diametral gegenüberliegend angeordnete Kugelrollen mit der Laufbahn des äußeren Lagerrings in Kontakt. Danach erfolgt ebenfalls ein entgegengesetztes Verkippen der einerseits und der andererseits des äußeren Lagerrings angeordneten Kugelrollen in der Art, dass diese innerhalb der Laufbahn des inneren Lagerrings zu einer der Seitenflächen des inneren Lagerrings in eine schräge Stellung angestellt werden. Bei dieser Variante der Stellung der Lagerringe zueinander bedeutet dies jedoch, dass das schräge Anstellen der Kugelrollen zur oberen bzw. zur unteren Seitenfläche des inneren Lagerrings hin erfolgt, wobei gemäß Anspruch 14 die verkippten Kugelrollen auf ihrer abgesenkten Seite dann wieder etwa auf der Ebene der Oberseite des Lagerkäfigs angeordnet sind. Danach folgt dann das Verschwenken des äußeren Lagerrings zum inneren Lagerring mit dem Lagerkäfig und den Kugelrollen in Richtung der abgesenkten Seiten der verkippten Kugelrollen, wobei die unterschiedlichen Rillentiefen der Laufbahnen in den Lagerringen es zulassen, dass dieses Verschwenken ohne zwischenzeitlichen radialen Versatz zwischen den Lagerringen und ohne Verklemmen der Kugelrollen in der Laufbahn des inneren Lagerrings in einem durchgehenden Arbeitsschritt ausgeführt werden kann.

Unabhängig von der jeweiligen Ausführung der Verfahrensschritte 4 und 5 wird dann in einem sechsten Montageschritt der äußere oder der innere Lagerring oder auch beide Lagerringe des bereits montierten, aber in seinen Laufbahnen noch liegend angeordnete Kugelrollen aufweisenden Kugelrollenlagers in eine Drehbewegung versetzt bzw. mit einer solchen Drehzahl beschleunigt, dass die Kugelrollen durch Eigenrotation und durch Fliehkraft sich selbsttätig in ihre Betriebsstellung innerhalb der Laufbahnen der Lagerringe aufrichten. Dies ist deshalb möglich, da die Kugelrollen gemäß Anspruch 17 beim Versetzen des äußeren Lagerrings in eine Drehbewegung mit den Randbereichen ihrer Laufflächen in Kontakt mit den Randbereichen der Laufbahnen ihrer Lagerringe stehen und somit durch Reibkontakt mit den Lagerringen mit beschleunigt werden. Der Abschluss des erzeugten Aufrichteffektes der Kugelrollen ist dabei durch die eintretende Leichtgängigkeit des Kugelrollenlagers bemerkbar.

Als abschließender siebter Montageschritt erfolgt dann noch das Umbördeln der Käfigborde des Lagerkäfigs in Richtung der Seitenflächen der Kugelrollen, um somit die bereits beschriebene axiale Führung der Kugelrollen zur Vermeidung des beschriebenen Quertaumeleffekt in bestimmten Betriebszuständen herzustellen, sowie ein je nach Anwendungsfall nötiges oder nicht benötigtes optionales Befetten und/oder Abdichten des Kugelrollenlagers.

### Kurze Beschreibung der Zeichnungen

Bevorzugte Ausführungsformen des erfindungsgemäß ausgebildeten Kugelrollenlagers sowie des erfindungsgemäßen Verfahrens zur Montage eines solchen Kugelrollenlagers werden nachfolgend unter Bezugnahme auf die beigefügten Zeichnungen näher erläutert. Dabei zeigen:
- Figur 1: eine vergrößerte dreidimensionale Darstellung einer Draufsicht auf eine erste Ausführungsform eines erfindungsgemäß ausgebildetes Kugelrollenlager;
- Figur 2: einen dreidimensionalen Querschnitt durch die erste Ausführungsform des erfindungsgemäß ausgebildete Kugelrollenlager gemäß Figur 1:
- Figur 3: eine vergrößerte Darstellung der oberen Hälfte des Querschnittes durch die erste Ausführungsform des erfindungsgemäßen Kugelrollenlagers gemäß Figur 2;
- Figur 4: eine vergrößerte Darstellung der oberen Hälfte des Querschnittes durch eine zweite Ausführungsform eins erfindungsgemäßen Kugelrollenlagers;
- Figur 5: eine dreidimensionale Gesamtdarstellung des Lagerkäfigs der Ausführungsformen gemäß Figur 3 und 4 eines erfindungsgemäß ausgebildeten Kugelrollenlagers;
- Figur 6: eine vergrößerte Darstellung einer Käfigtaschen des Lagerkäfigs der Ausführungsformen gemäß Figur 3 und 4 eines erfindungsgemäß ausgebildeten Kugelrollenlagers;
- Figur 7: eine dreidimensionale Ansicht auf und eine Schnittdarstellung durch die erste Ausführungsform eines erfindungsgemäßen Kugelrollenlagers nach dem ersten Verfahrensschritt zu dessen Montage;
- Figur 8: eine dreidimensionale Ansicht auf und eine Schnittdarstellung durch die erste Ausführungsform eines erfindungsgemäßen Kugelrollenlagers nach dem zweiten Verfahrensschritt zu dessen Montage;
- Figur 9: eine dreidimensionale Ansicht auf und eine Schnittdarstellung durch die erste Ausführungsform eines erfindungsgemäßen Kugelrollenlagers nach dem dritten Verfahrensschritt zu dessen Montage;
- Figur 10: eine dreidimensionale Ansicht auf und eine Schnittdarstellung durch die erste Ausführungsform eines erfindungsgemäßen Kugelrollenlagers nach einer ersten Variante des vierten Verfahrensschrittes zu dessen Montage;
- Figur 11: eine dreidimensionale Ansicht auf und eine Schnittdarstellung durch die erste Ausführungsform eines erfindungsgemäßen Kugelrollenlagers nach einem ersten Zwischenschritt der ersten Variante des vierten Verfahrensschrittes zu dessen Montage;
- Figur 12: eine dreidimensionale Ansicht auf und eine Schnittdarstellung durch die erste Ausführungsform eines erfindungsgemäßen Kugelrollenlagers nach einem ersten Zwischenschritt einer ersten Variante des fünften Verfahrensschrittes zu dessen Montage;
- Figur 13: eine dreidimensionale Ansicht auf und eine Schnittdarstellung durch die erste Ausführungsform eines erfindungsgemäßen Kugelrollenlagers vor dem sechsten Verfahrensschritt zu dessen Montage;
- Figur 14: eine dreidimensionale Ansicht auf die zweite Ausführungsform eines erfindungsgemäßen Kugelrollenlagers nach zwei ersten Vorbereitungsschritten einer zweiten Variante des vierten Verfahrensschrittes zu dessen Montage;
- Figur 15: eine dreidimensionale Ansicht auf die zweite Ausführungsform eines erfindungsgemäßen Kugelrollenlagers vor der Ausführung der zweiten Variante des vierten Verfahrensschrittes zu dessen Montage;
- Figur 16: eine dreidimensionale Ansicht auf die zweite Ausführungsform eines erfindungsgemäßen Kugelrollenlagers nach der Ausführung der zweiten Variante des vierten Verfahrensschrittes zu dessen Montage;
- Figur 17: eine dreidimensionale Ansicht auf die zweite Ausführungsform eines erfindungsgemäßen Kugelrollenlagers während der Ausführung einer zweiten Variante des fünften Verfahrensschrittes zu dessen Montage;
- Figur 18: eine dreidimensionale Ansicht auf die zweite Ausführungsform eines erfindungsgemäßen Kugelrollenlagers nach der Ausführung der zweiten Variante des fünften Verfahrensschrittes zu dessen Montage;
- Figur 19: eine dreidimensionale Ansicht auf die zweite Ausführungsform eines erfindungsgemäßen Kugelrollenlagers vor dem sechsten Verfahrensschritt zu dessen Montage;
- Figur 20: eine dreidimensionale Ansicht auf und eine Schnittdarstellung durch die erste Ausführungsform eines erfindungsgemäßen Kugelrollenlagers nach dem sechsten Verfahrensschritt zu dessen Montage;
- Figur 21: eine dreidimensionale Ansicht auf und eine Schnittdarstellung durch die erste Ausführungsform eines erfindungsgemäßen Kugelrollenlagers nach dem siebten und letzten Verfahrensschritt zu dessen Montage.

### Ausführliche Beschreibung der Zeichnungen

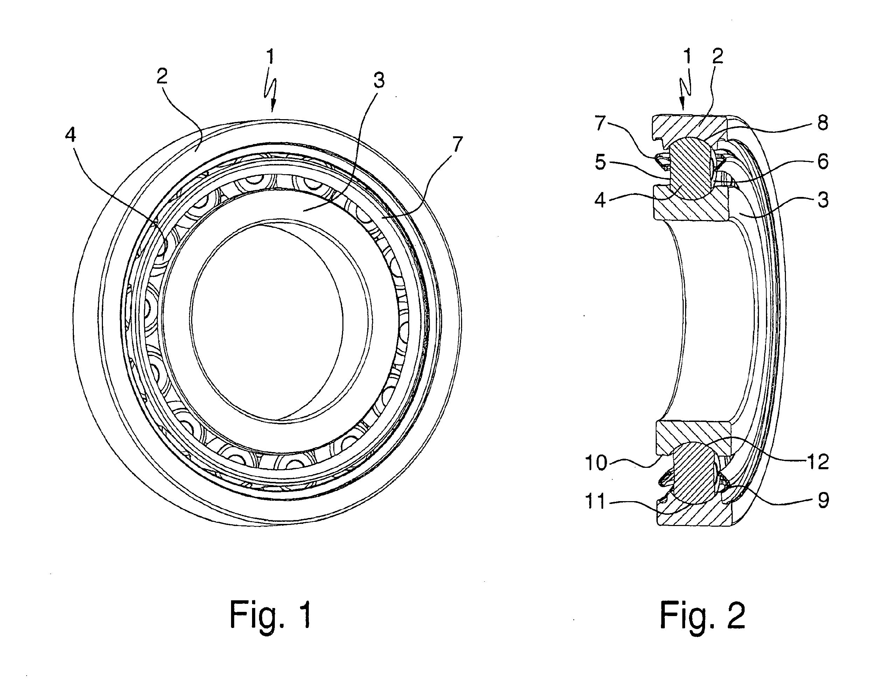

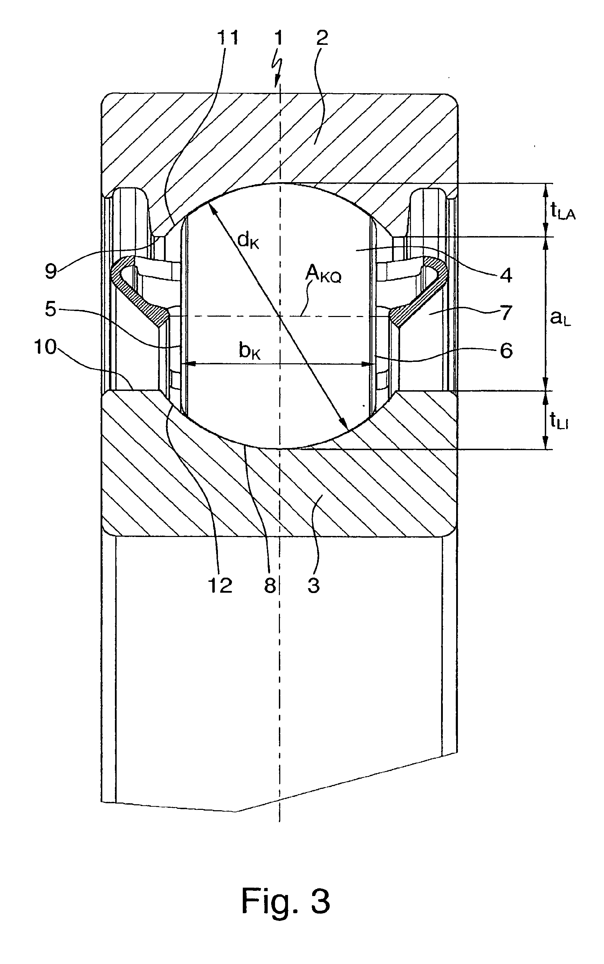

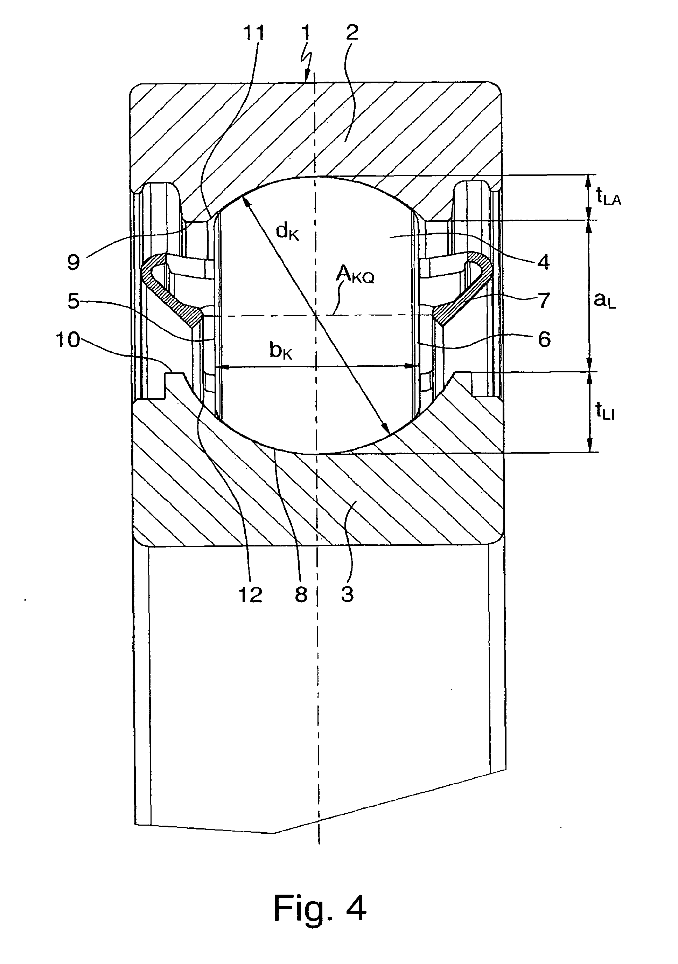

Aus den Figuren 1 und 2 gehen zwei verschiedene Ansichten eines einreihigen Kugelrollenlagers 1 hervor, welches im Wesentlichen aus einem äußeren Lagerring 2 und einem inneren Lagerring 3 sowie aus einer Vielzahl zwischen diesen Lagerringen 2, 3 in einer Reihe angeordneter Kugelrollen 4 besteht, die jeweils zwei symmetrisch von einer Kugelgrundform abgeflachte, parallel zueinander angeordnete Seitenflächen 5, 6 aufweisen und durch einen Lagerkäfig 7 in Umfangsrichtung in gleichmäßigen Abständen zueinander gehalten werden. Durch die Figuren 3 und 4 wird dabei deutlich, dass diese Kugelrollen 4 zwischen ihren Seitenflächen 5, 6 eine Breite b_{K} von etwa 70% des Durchmessers d_{K} ihrer Kugelgrundform aufweisen und mit ihren Laufflächen 8 in zwei in die Innenseite 9 des äußeren Lagerrings 2 und in die Außenseite 10 des inneren Lagerrings 3 eingearbeitete rillenförmigen Laufbahnen 11, 12 abrollen, deren Tiefe t_{LA}, t_{LI} derart bemessen ist, dass der Abstand a_{L} zwischen der Innenseite 9 des äußeren Lagerrings 2 und der Außenseite 10 des inneren Lagerrings 3 kleiner als die Breite b_{K} der Kugelrollen 4 ist.

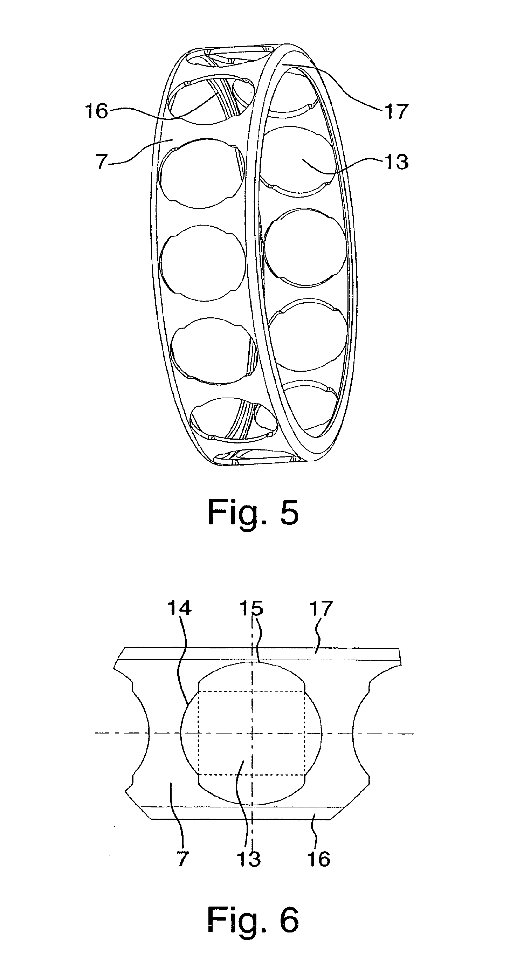

Die wesentliche Neuerung an dem dargestellten Kugelrollenlager 1 besteht darin, dass dessen in Figur 5 nochmals einzeln abgebildeter Lagerkäfig 7 als Fensterkäfig ausgebildet ist, dessen einzelne Käfigtaschen 13, wie in Figur 6 durch gestrichelte Hilfslinien angedeutet, jeweils die integrierte Gesamtkontur einer längs und einer quer zur Umfangsrichtung angeordneten Querschnittskontur 14, 15 einer Kugelrolle 4 aufweisen und derart zueinander beabstandet angeordnet sind, dass die Summe der Abstände der eingefüllten Kugelrollen 4 auf deren Teilkreis kleiner als der Durchmesser d_{K} der Kugelgrundform einer einzelnen Kugelrolle 4 ist. Darüber hinaus zeichnet sich das erfindungsgemäße Kugelrollenlager 1 dadurch aus, die Tiefe t_{LA}, t_{LI} der rillenförmigen Laufbahnen 11, 12 in beiden Lagerringen 2, 3 entweder, wie in Figur 3 dargestellt, gleich ist und ca. 17% bis 25% des Durchmessers d_{K} der Kugelgrundform der Kugelrollen 4 beträgt oder, wie in Figur 4 angedeutet, unterschiedlich ist und im äußeren Lagerring 2 ca. 17% sowie im inneren Lagerring 3 bis zu 30% des Durchmessers d_{K} der Kugelgrundform der Kugelrollen 4 beträgt. Beide Ausführungsformen der Rillentiefen der Laufbahnen 11, 12 bewirken auch bei einer zulässigen Schiefstellung des Kugelrollenlagers 1 aus der Mittellage einen hohen Schmiegungsgrad der Kugelrollen 4 zu ihren Laufbahnen 11, 12, ermöglichen jedoch, wie nachfolgend noch beschrieben wird, unterschiedliche Ausführungen des Verfahrens zur Montage des Kugelrollenlagers 1.

Aus den Figuren 5 und 6 ist desweiteren ersichtlich, dass die längs zur Umfangsrichtung angeordnete Querschnittskontur 14 der Käfigtaschen 13 des Lagerkäfigs 7 jeweils der Form einer oberhalb der Querachse A_{KQ} einer Kugelrolle 4 angeordneten Schnittebene aufweist, während die quer zur Umfangsrichtung angeordnete Querschnittskontur 15 der Käfigtaschen 13 etwas länger ausgebildet ist und jeweils der Form einer direkt auf der Querachse A_{KQ} einer Kugelrolle 4 angeordneten Schnittebene entspricht. Die quer zur Umfangsrichtung angeordnete Querschnittskontur 15 der Käfigtaschen 13 ist dabei zur Durchführung des nachfolgend beschriebenen Montageverfahrens ausschlaggebend und trägt nach der Lagermontage nicht wie die längs zur Umfangsrichtung angeordnete Querschnittskontur 14 der Käfigtaschen 13 zur Wälzkörperführung bei.

Ebenso geht aus den Figuren 5 und 6 hervor, dass der Lagerkäfig 7 zunächst, wie abgebildet, einen U-förmigen Profilquerschnitt aufweist, dessen seitliche Profilschenkel als Käfigborde 16, 17 zur Vermeidung eines Quertaumelns der Kugelrollen 4 vorgesehen sind. Diese Käfigborde 16, 17 weisen dabei eine solche Länge auf, dass sie nach einem die Lagermontage abschließenden Einbördeln zu den Kugelrollen 4 hin die in den Figuren 3 und 4 abgebildete Form aufweisen, bei der deren Endkanten etwa auf Höhe des Teilkreises des Kugelrollenlagers 1 angeordnet sind. Das Ausgangsmaterial für einen solchen Lagerkäfig 7 ist dabei ein Blechband, aus dem durch Anprofilieren der Käfigborde 16, 17, Einstanzen der Käfigtaschen 13, Ablängen auf das Umfangsmaß des Lagerkäfigs 7 sowie Einrollen zu einem Ring und Verschweißen der Ringenden der Lagerkäfig 7 spanlos hergestellt wird. Die mit ihrer speziellen Form zueinander beabstandet angeordneten Käfigtaschen 13 des Lagerkäfig 7 ermöglichen es dabei, dass das montierte Kugelrollenlager 1, im Gegensatz zu baugleichen Rillenkugellagern oder anderen bekannten Kugelrollenlagern, einen Wälzkörperfüllgrad von etwa 85% bis 95% aufweist, so dass dessen Radialbelastbarkeit um ein vielfaches höher ist und dessen Lebensdauer, ausgehend von einer Lebensdauer von 100% für ein baugleiches Rillenkugellager, etwa 180% bis 240% beträgt.

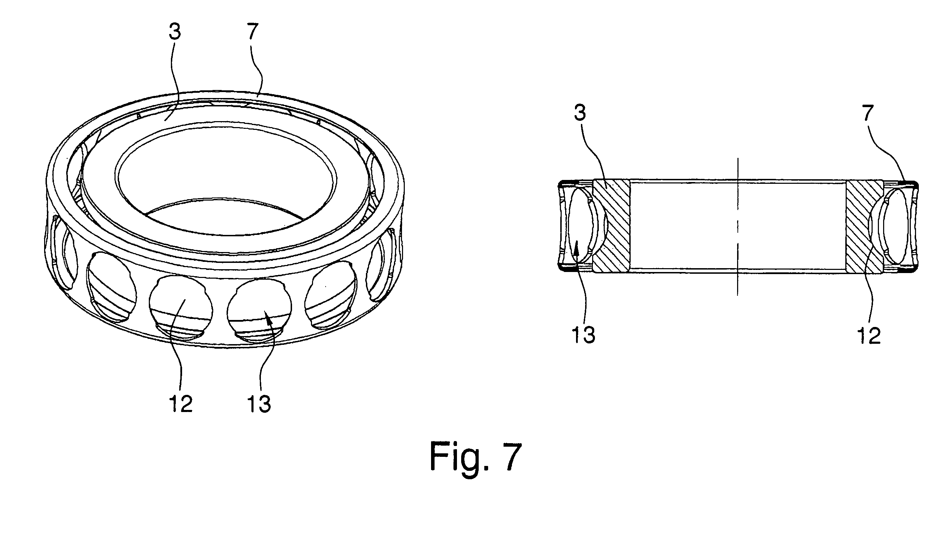

In den Figuren 7 bis 21 sind im Weiteren zwei den Ausführungsformen des Kugelrollenlagers 1 gemäß der Figuren 3 und 4 angepasste Ausführungsformen des Verfahren zur Montage des erfindungsgemäß ausgebildeten Kugelrollenlagers 1 zeichnerisch dargestellt. Dieses Verfahren ist als so genannte Kreuz-Schräg-Schwenkmontage ausgebildet, bei der die Lagerringe 2, 3 zwischenzeitlich in einer zueinander gekreuzten Stellung zusammen mit den in einer Schrägstellung befindlichen Kugelrollen 4 und dem Lagerkäfig 7 ineinander verschwenkt werden.

Nach diesem Verfahren beginnt die Lagermontage unabhängig von dessen Ausführungsform gemäß Figur 3 oder 4 in einem ersten, in Figur 7 beispielhaft mit der Ausführungsform gemäß Figur 3 abgebildeten Montageschritt zunächst damit, dass der innere Lagerring 3 und der Lagerkäfig 7 des Kugelrollenlagers 1 auf einer zumindest annähernd gemeinsamen Ebene in konzentrischer Stellung zueinander angeordnet werden.

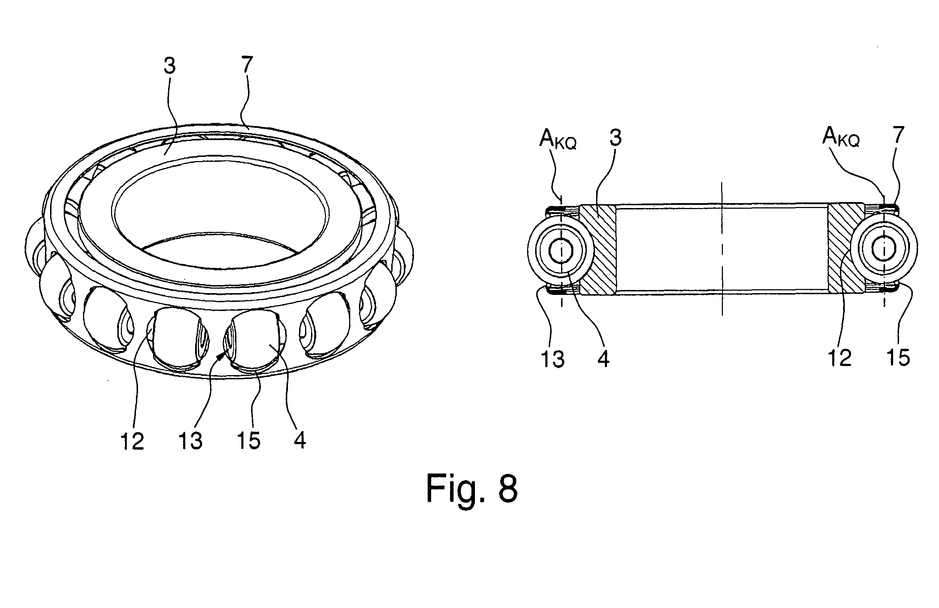

In dem in Figur 8 dargestellten zweiten Montageschritt erfolgt dann das Einfügen der Kugelrollen 4 in einer um 90° zu deren Betriebstellung verdrehten Stellung durch die Käfigtaschen 13 des Lagerkäfigs 7 hindurch in die Laufbahn 12 des inneren Lagerrings 3, wobei dieses Einfügen der Kugelrollen 4 deutlich sichtbar ausschließlich durch die quer zur Umfangsrichtung angeordnete Querschnittskontur 15 der Käfigtaschen 13 erfolgt.

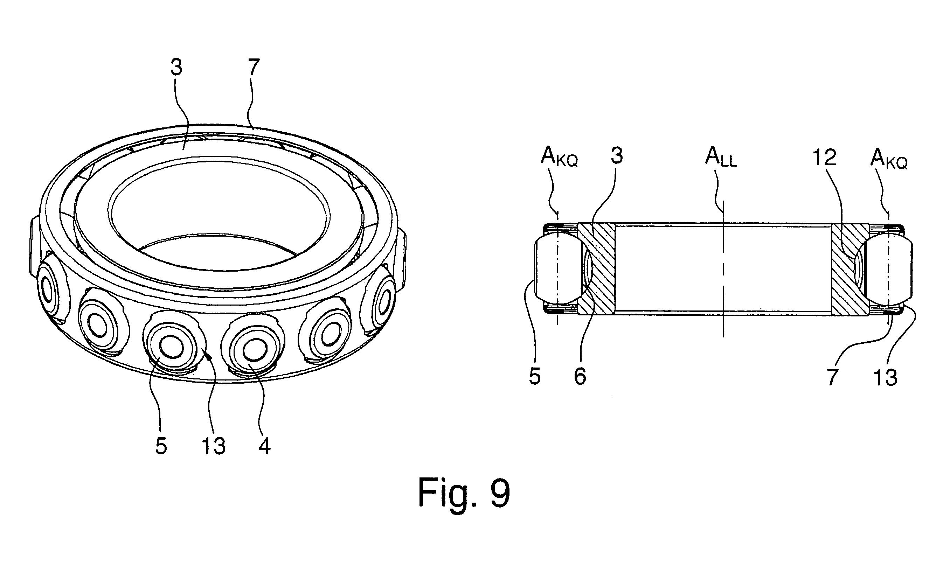

Anschließend werden die Kugelrollen 4 in einem dritten, durch Figur 9 verdeutlichten Montageschritt innerhalb der Käfgtaschen 13 um deren Querachsen A_{KQ} um 90° in eine liegende Stellung derart verschwenkt, dass deren Seitenflächen 5, 6 parallel zur Lagerlängsachse A_{LL} angeordnet sind bzw. eine ihrer Seitenflächen 5 oder 6 direkt in der Laufbahn 12 des inneren Lagerrings 3 liegt, wobei die Querachsen A_{KQ} der Kugelrollen 4 deutlich sichtbar jeweils unterhalb der Ebene der Unterseite des Lagerkäfigs 7 angeordnet sind.

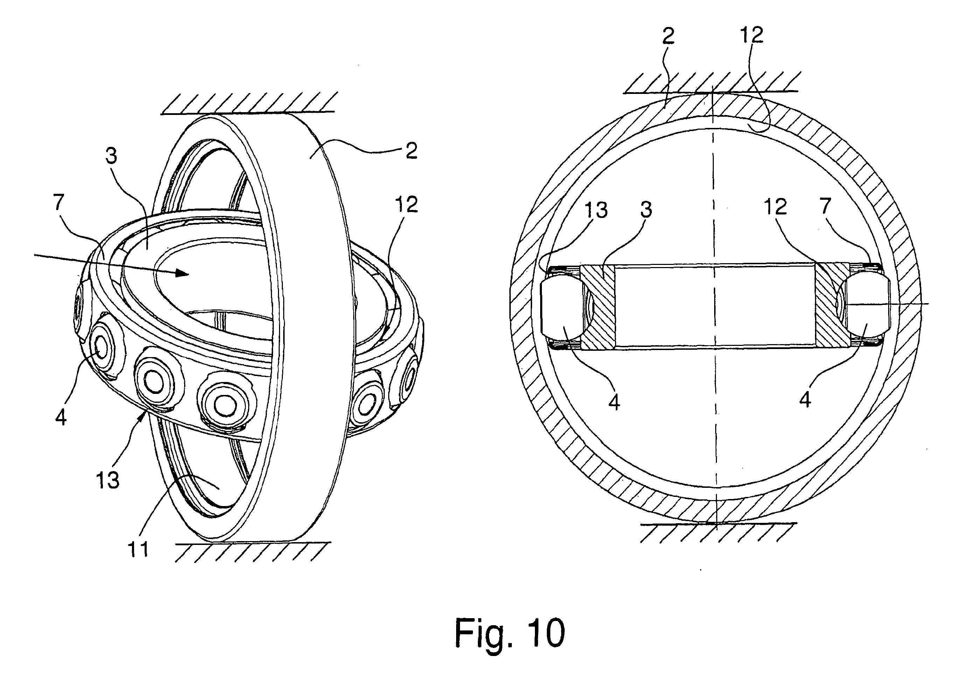

Nach dem Verschwenken der Kugelrollen 4 in ihre liegende Stellung erfolgt dann als vierter Montageschritt das Ineinanderfügen von äußerem Lagerring 2 und innerem Lagerring 3 mit Lagerkäfig 7 und Kugelrollen 4 in einer zumindest annähernd um 90° verdrehten bzw. gekreuzten Stellung der Lagerringe 2, 3, zueinander. In einer ersten, speziell für die erste Ausführungsform des Kugelrollenlagers 1 nach Figur 3 geeigneten Variante dieses Verfahrensschrittes erfolgt dazu zunächst als erster Vorbereitungsschritt das in Figur 10 abgebildete Fixieren des äußeren Lagerrings 2 in einer senkrechten Stellung in einer nicht näher dargestellten Hilfsvorrichtung sowie das durch den Bewegungspfeil angedeutete Einsetzen des inneren Lagerrings 3 zusammen mit dem Lagerkäfig 7 und den Kugelrollen 4 in einer waagerechten Stellung in den äußeren Lagerring 2. Durch die zugehörige Schnittdarstellung in Figur 10 wird dabei deutlich, dass dabei zunächst nur zwei diametral gegenüberliegend angeordnete Kugelrollen 4 mit der Laufbahn 11 des äußeren Lagerrings 2 in Kontakt treten.

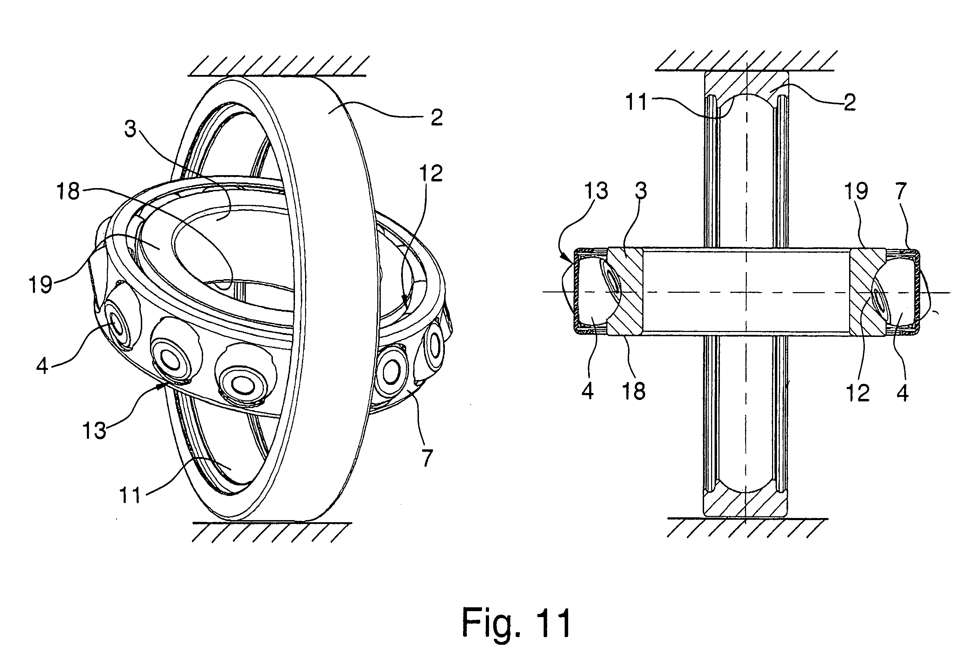

Als zweiter Vorbereitungsschritt für die erste Variante des vierten Montageschrittes erfolgt dann ein in Figur 11 veranschaulichtes Verkippen der einerseits und der andererseits des äußeren Lagerrings 2 angeordneten Kugelrollen 4 in der Art, dass diese innerhalb der Laufbahn 12 des inneren Lagerrings 3 jeweils entgegengesetzt zu einer der Seitenflächen 18, 19 des inneren Lagerrings 3 in eine schräge Stellung angestellt werden und dann auf ihrer abgesenkten Seite etwa auf der Ebene der Oberseite des Lagerkäfigs 7 angeordnet sind. Deutlich sichtbar erfolgt dabei das schräge Anstellen der Kugelrollen 4 auf der links des äußeren Lagerrings 2 angeordneten Hälfte des inneren Lagerrings 3 zur unteren Seitenfläche 18 des inneren Lagerrings 3 und auf der rechts des äußeren Lagerrings 2 angeordneten Hälfte des inneren Lagerrings 3 zur oberen Seitenfläche 19 des inneren Lagerrings 3.

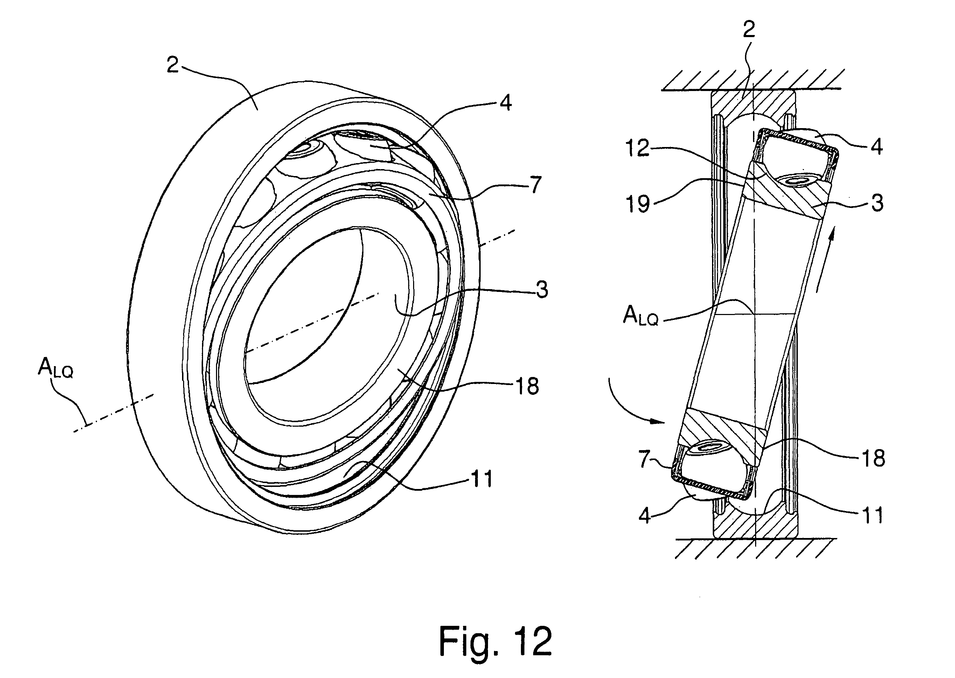

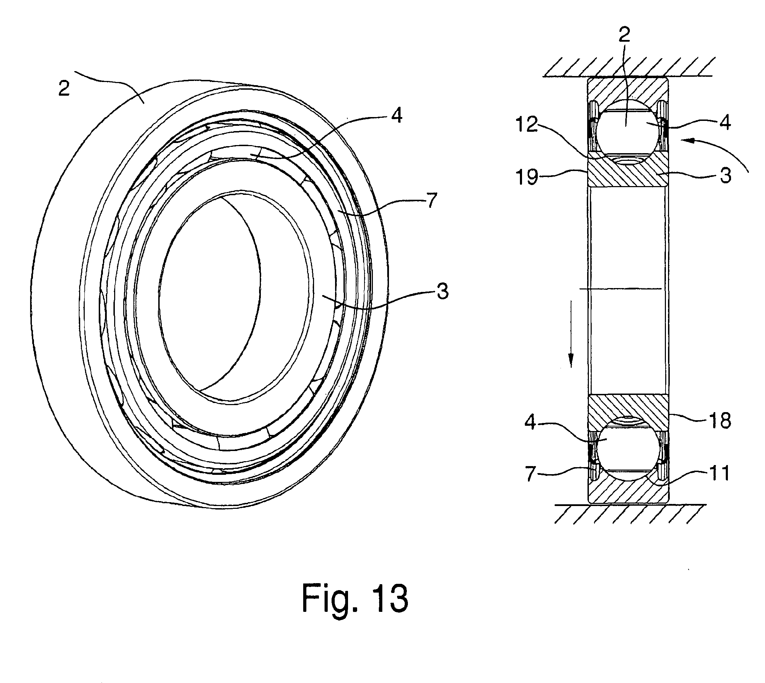

Als Verfahrensschritt fünf erfolgt anschließend das Zueinanderschwenken von äußerem Lagerring 2 und innerem Lagerring 3 mit Lagerkäfig 7 und Kugelrollen 4 um deren gemeinsame Lagerquerachse A_{LQ}, bis beide Lagerringe 2, 3 koaxial zueinander angeordnet sind. Bei einer speziell für die erste Ausführungsform des Kugelrollenlagers 1 nach Figur 3 geeigneten Variante dieses Verfahrensschrittes erfolgt dieser Verfahrensschritt durch das in Figur 12 dargestellte Verschwenken des inneren Lagerrings 3 zusammen mit dem Lagerkäfig 7 und den Kugelrollen 4 zum äußeren Lagerring 2 um deren gemeinsame Lagerquerachse A_{LQ}, wobei die Seitenflächen 18, 19 des inneren Lagerrings 3, zu denen die Kugelrollen 4 angestellt sind, jeweils in Schwenkrichtung weisen. Darauf folgt ein in der Zeichnung durch Bewegungspfeile angedeutetes Herstellen eines geringen radialen Versatzes des inneren Lagerrings 3 zum äußeren Lagerring 2 durch Anheben des inneren Lagerrings 3, um das Einschwenken des der Versatzrichtung entgegengesetzten unteren Teils des inneren Lagerrings 3 zusammen mit dem Lagerkäfig 7 und den Kugelrollen 4 in den äußeren Lagerring 2 zu erleichtern. Für ein erleichtertes Einschwenken des verbleibenden oberen Teils des inneren Lagerrings 3 zusammen mit dem Lagerkäfig 7 und den Kugelrollen 4 in den äußeren Lagerring 2 wird dann in einem durch Figur 13 verdeutlichten weiteren Teilschritt zunächst der bereits eingeschwenkte untere Teil des inneren Lagerrings 3 entsprechend der Bewegungspfeile in der Zeichnung in den äußeren Lagerring 2 abgesenkt, so dass das Kugelrollenlager 1 somit zwar fertig montiert ist aber noch liegend angeordnete Kugelrollen 4 aufweist.

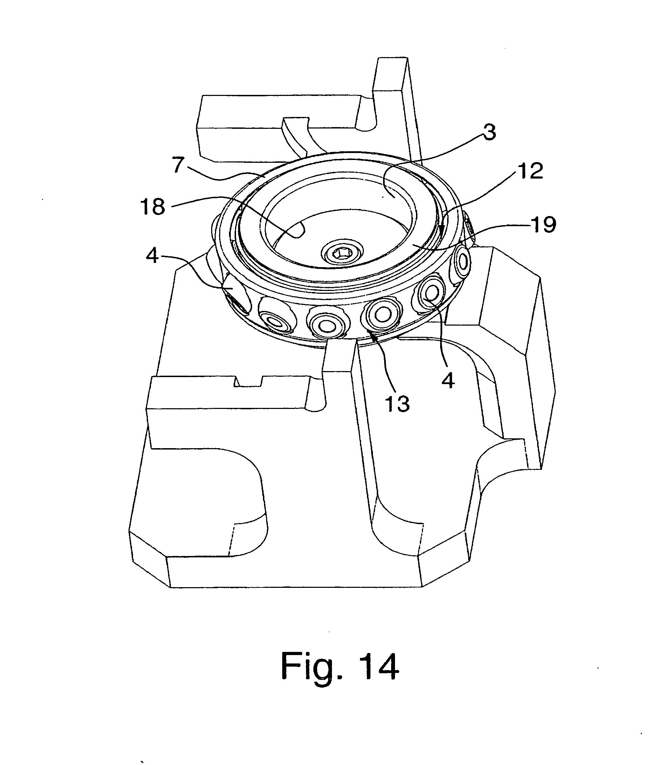

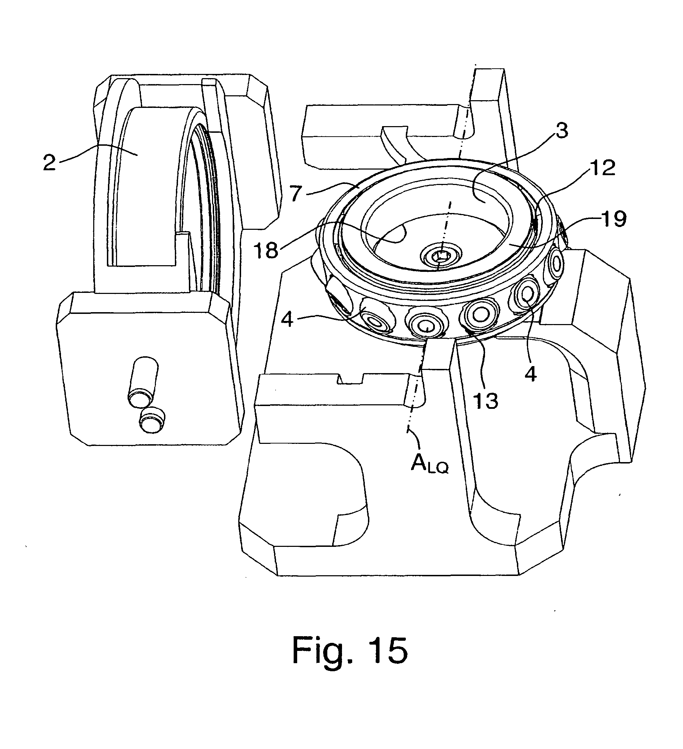

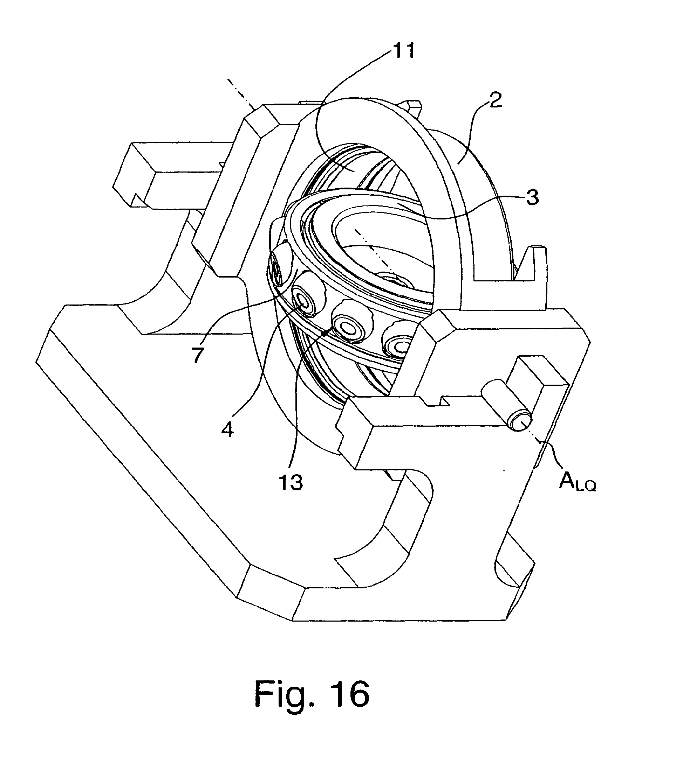

Bei einer zweiten, speziell für die zweite Ausführungsform des Kugelrollenlagers 1 nach Figur 4 geeigneten Variante des vierten Verfahrensschrittes erfolgt dagegen als erster Vorbereitungsschritt für das Ineinanderfügen von äußerem Lagerring 2 und innerem Lagerring 3 mit Lagerkäfig 7 und Kugelrollen 4 das in Figur 14 abgebildete Fixieren des inneren Lagerrings 3 mit Lagerkäfig 7 und Kugelrolle 4 in einer waagerechten Stellung in einer nicht näher bezeichneten Hilfsvorrichtung sowie als zweiter Vorbereitungsschritt das entgegengesetzte Verkippen der einerseits und andererseits des später aufzuschiebenden äußeren Lagerrings 2 angeordneten Kugelrollen 4 innerhalb der Laufbahn 12 des inneren Lagerrings 3 zu einer der Seitenflächen 18, 19 des inneren Lagerrings 3 in eine schräg angestellte Stellung. Danach wird der äußere Lagerring 2, wie in Figur 15 angedeutet, in einer senkrechten Stellung auf den inneren Lagerring 3 aufgeschoben, wobei durch Figur 16 deutlich wird, dass dabei ebenfalls zunächst nur zwei diametral gegenüberliegend angeordnete Kugelrollen 4 mit der Laufbahn 11 des äußeren Lagerrings 2 in Kontakt treten.

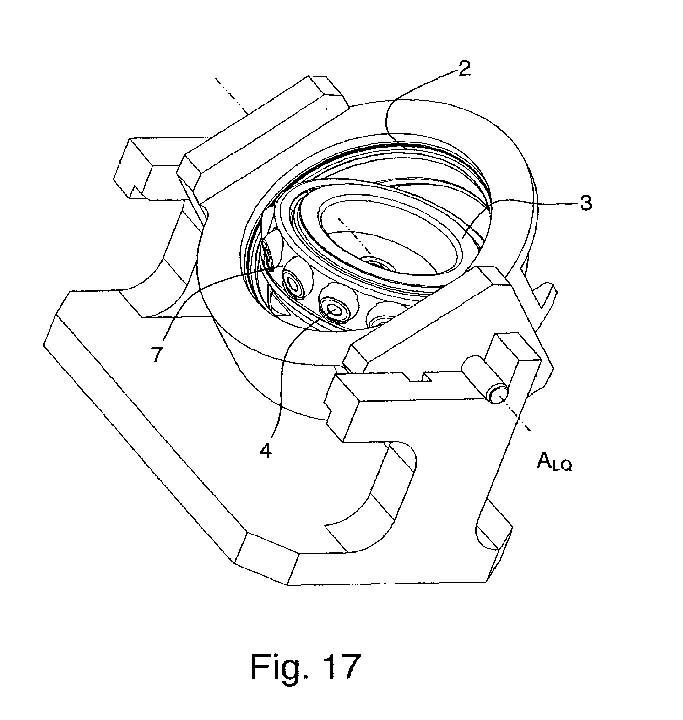

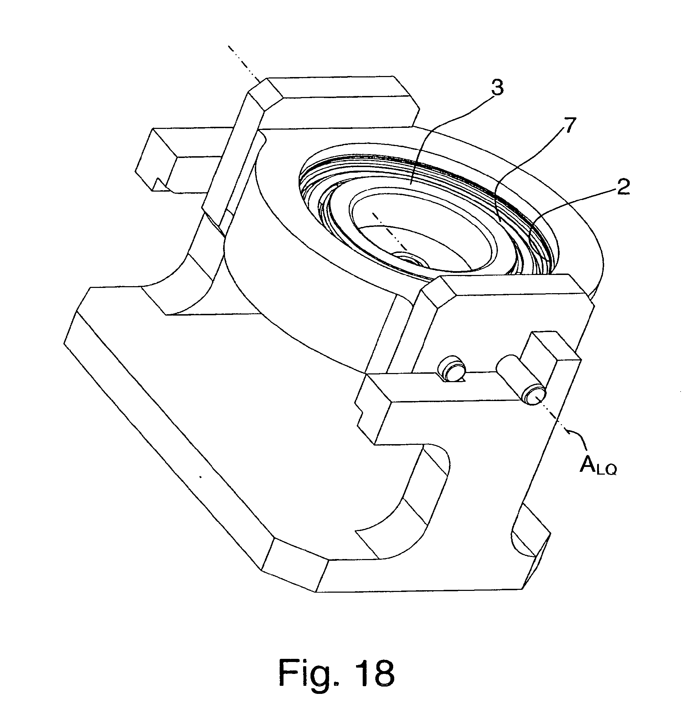

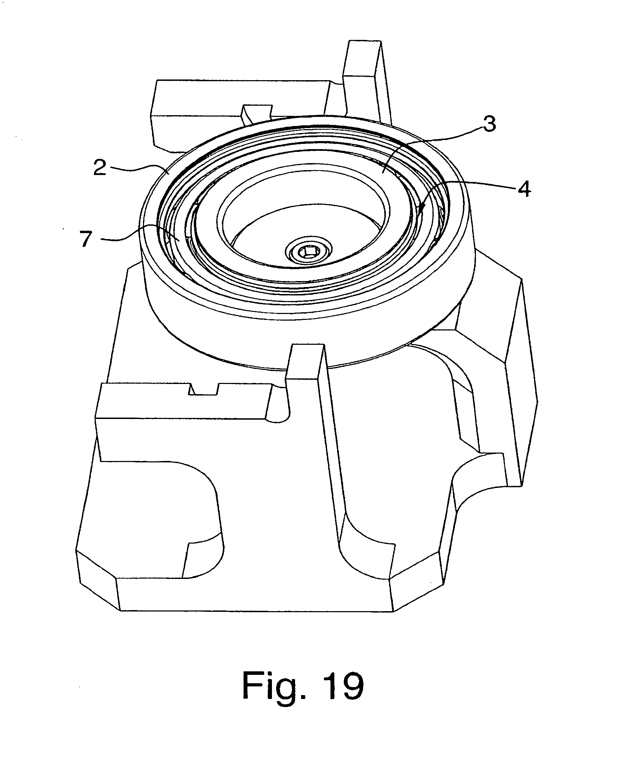

In Figur 17 ist dann das Zueinanderschwenken von äußerem Lagerring 2 und innerem Lagerring 3 mit Lagerkäfig 7 und Kugelrollen 4 um deren gemeinsame Lagerquerachse A_{LQ} gemäß dem fünften Verfahrensschritt dargestellt, was bei der für die zweite Ausführungsform des Kugelrollenlagers 1 nach Figur 4 geeigneten zweiten Variante durch Verschwenken des äußeren Lagerrings 2 zum inneren Lagerring 3 mit dem Lagerkäfig 7 und den Kugelrollen 4 in Richtung der abgesenkten Seiten der verkippten Kugelrollen 4 ohne jeglichen radialen Versatz der Lagerringe 2, 3 zueinander realisiert wird. Danach sind die Lagerringe 2, 3 wie in Figur 18 abgebildet koaxial zueinander angeordnet, so dass das Kugelrollenlager 1 somit zwar fertig montiert ist, aber, wie nach der ersten Variante der Verfahrensschritte vier und fünf und wie in Figur 19 angedeutet, ebenfalls noch liegend angeordnete Kugelrollen 4 aufweist.

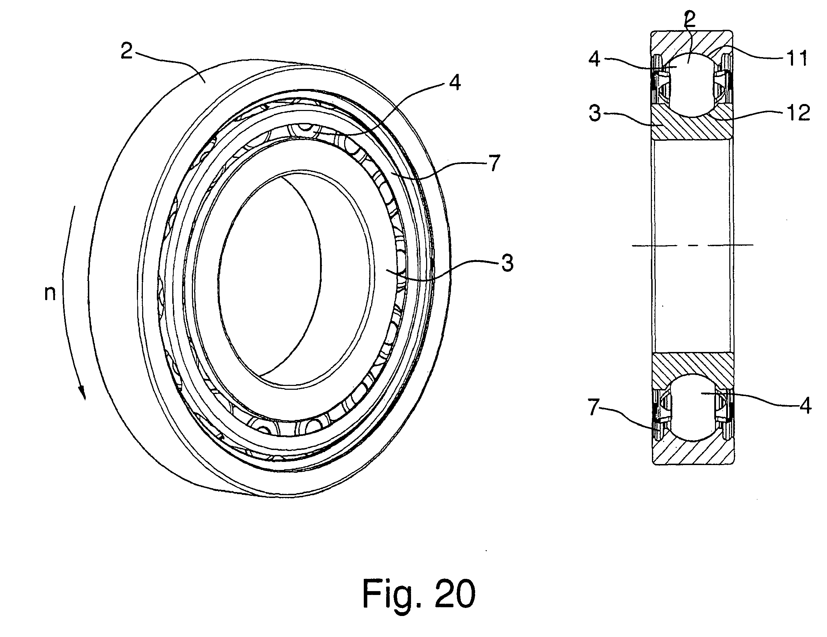

Figur 20 zeigt dann wiederum stellvertretend für beide Ausführungsformen des erfindungsgemäßen Kugelrollenlagers 1 dessen erste Ausführungsform in einem sechsten Montageschritt, bei dem nur der äußere Lagerring 2 des Kugelrollenlagers 1, wie durch den Bewegungspfeil in der Zeichnung angedeutet, in eine Drehbewegung versetzt bzw. mit einer solchen Drehzahl n beschleunigt wird, dass die Kugelrollen 4 durch Eigenrotation und durch Fliehkraft sich selbsttätig in ihre Betriebsstellung innerhalb der Laufbahnen 11, 12 der Lagerringe 2, 3 aufrichten. Dies ist deshalb möglich, da die Kugelrollen 4, wie in den Figuren 13 und 19 zu sehen ist, nach dem fünften Verfahrensschritt eine liegende Stellung aufweisen, bei der sie mit den Randbereichen ihrer Laufflächen 8 in Kontakt mit den Randbereichen der Laufbahnen 11, 12 ihrer Lagerringe 2, 3 stehen und somit durch Reibkontakt mit den Lagerringen 2, 3 mit beschleunigt werden können.

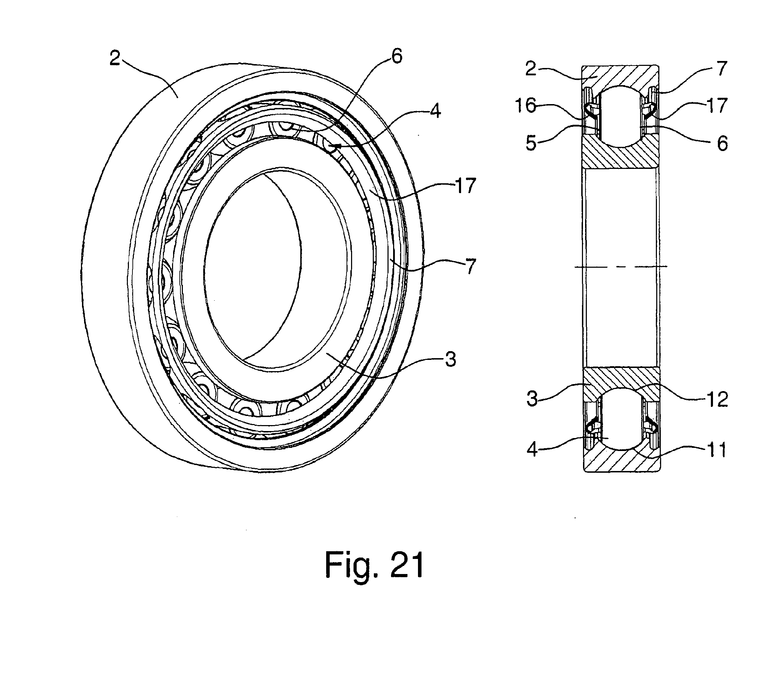

Als abschließender siebter Montageschritt erfolgt dann noch das in Figur 21 angedeutete Umbördeln der Käfigborde 16, 17 des Lagerkäfigs 7 in Richtung der Seitenflächen 5, 6 der Kugelrollen 4, um somit eine axiale Führung der Kugelrollen 4 zur Vermeidung des beschriebenen Quertaumeleffekt in bestimmten Betriebszuständen herzustellen, sowie ein für das konkret dargestellte Kugelrollenlager 1 vorgesehenes Befetten und Abdichten des Kugelrollenlagers 1.

### Bezugszahlenliste

- 1: Kugelrollenlager
- 2: äußerer Lagerring
- 3: innerer Lagerring
- 4: Kugelrollen
- 5: Seitenfläche von 4
- 6: Seitenfläche von 4
- 7: Lagerkäfig
- 8: Laufflächen von 4
- 9: Innenseite von 2
- 10: Außenseite von 3
- 11: Laufbahn in 9
- 12: Laufbahn in 10
- 13: Käfigtaschen
- 14: Querschnittskontur von 13
- 15: Querschnittskontur von 13
- 16: Käfigbord an 7
- 17: Käfigbord an 7
- 18: Seitenfläche von 3
- 19: Seitenfläche von 3
- b_{K}: Breite von 4
- t_{LA}: Tiefe von 11
- t_{LI}: Tiefe von 12
- d_{K}: Durchmesser von 4
- a_{L}: Abstand zwischen 2 und 3
- A_{LQ}: Lagerquerachse
- A_{LL}: Lagerlängsachse
- A_{KQ}: Querachse von 4
- n: Drehzahl

## Patentansprüche

1. Kugelrollenlager (1), im Wesentlichen bestehend aus einem äußeren Lagerring (2) und einem inneren Lagerring (3) sowie aus einer Vielzahl zwischen diesen Lagerringen (2, 3) angeordneter Kugelrollen (4), die jeweils zwei symmetrisch von einer Kugelgrundform abgeflachte, parallel zueinander angeordnete Seitenflächen (5, 6) aufweisen und durch einen Lagerkäfig (7) in Umfangsrichtung in gleichmäßigen Abständen zueinander gehalten werden, wobei die Kugelrollen (4) zwischen ihren Seitenflächen (5, 6) eine Breite (b_{K}) von etwa 70% des Durchmessers (d_{K}) ihrer Kugelgrundform aufweisen und mit ihren Laufflächen (8) in zwei in die Innenseite (9) des äußeren Lagerrings (2) und in die Außenseite (10) des inneren Lagerrings (3) eingearbeitete rillenförmigen Laufbahnen (11, 12) abrollen, deren Tiefe (t_{LA}, t_{LI}) derart bemessen ist, dass der Abstand (a_{L}) zwischen der Innenseite (9) des äußeren Lagerrings (2) und der Außenseite (10) des inneren Lagerrings (3) kleiner als die Breite (b_{K}) der Kugelrollen (4) ist, **dadurch gekennzeichnet, dass** der Lagerkäfig (7) des Kugelrollenlagers (1) als Fensterkäfig ausgebildet ist, dessen einzelne Käfigtaschen (13) jeweils die integrierte Gesamtkontur einer längs und einer quer zur Umfangsrichtung angeordneten Kontur (14, 15) eines Querschnittes durch eine in senkrechter Rollstellung angeordnete Kugelrolle (4) aufweisen und derart zueinander beabstandet angeordnet sind, dass die Summe der Abstände der eingefüllten Kugelrollen (4) auf deren Teilkreis kleiner als der Durchmesser (d_{K}) der Kugelgrundform einer einzelnen Kugelrolle (4) ist, wobei die längs zur Umfangsrichtung angeordnete Kontur (14) der Käfigtaschen (13) die Form einer oberhalb der Mittelquerachse (A_{KQ}) einer Kugelrolle (4) angeordneten Schnittebene und die quer zur Umfangsrichtung angeordnete Kontur (15) der Käfigtaschen (13) die Form einer direkt auf der Mittelquerachse (A_{KQ}) einer Kugelrolle (4) angeordneten Schnittebene aufweist.

2. Kugelrollenlager nach Anspruch 1, **dadurch gekennzeichnet, dass** die Tiefe (t_{LA}, t_{LI}) der rillenförmigen Laufbahnen (11, 12) in beiden Lagerringen (2, 3) gleich ist und ca. 17% bis 25% des Durchmessers (d_{K}) der Kugelgrundform der Kugelrollen (4) beträgt.

3. Kugelrollenlager nach Anspruch 1, **dadurch gekennzeichnet, dass** die Tiefe (t_{LA}, t_{LI}) der rillenförmigen Laufbahnen (11, 12) in beiden Lagerringen (2, 3) unterschiedlich ist und im äußeren Lagerring (2) ca. 17% sowie im inneren Lagerring (3) bis zu 30% des Durchmessers (d_{K}) der Kugelgrundform der Kugelrollen (4) beträgt.

4. Kugelrollenlager nach Anspruch 2 oder 3, **dadurch gekennzeichnet, dass** der Lagerkäfig (7) zunächst einen U-förmigen Profilquerschnitt aufweist, dessen seitliche Profilschenkel als Käfigborde (16, 17) zur Vermeidung eines Quertaumelns der Kugelrollen (4) vorgesehen sind.

5. Kugelrollenlager nach Anspruch 4, **dadurch gekennzeichnet, dass** die Käfigborde (16, 17) eine solche Länge aufweisen, dass deren Endkanten nach einem die Lagermontage abschließenden Einbördeln zu den Kugelrollen (4) hin etwa auf Höhe des Teilkreises des Kugelrollenlagers (1) angeordnet sind.

6. Kugelrollenlager nach Anspruch 5, **dadurch gekennzeichnet, dass** der Lagerkäfig (7) aus einem Blechband durch Profilieren der Käfigborde (16, 17), Stanzen der Käfigtaschen (13), Ablängen auf Umfangsmaß, Einrollen zu einem Ring und Verschweißen der Ringenden hergestellt ist.

7. Kugelrollenlager nach Anspruch 2 oder 3, **dadurch gekennzeichnet, dass** das montierte Kugelrollenlager (1) einen Wälzkörperfüllgrad von ca. 85% bis 95% aufweist und dessen Lebensdauer, ausgehend von einer Lebensdauer von 100% für ein baugleiches Rillenkugellager, etwa 180% bis 240 % beträgt.

8. Verfahren zur Montage eines Kugelrollenlagers mit den Merkmalen des Anspruchs 1, **gekennzeichnet durch** eine Kreuz-Schräg-Schwenkmontage zwischen dem inneren Lagerring (3), dem Lagerkäfig (7) und den Kugelrollen (4) sowie dem äußeren Lagerring (2), mit folgenden Schritten:
a) Anordnung des inneren Lagerrings (3) und des Lagerkäfigs (7) des Kugelrollenlagers (1) in konzentrischer Stellung zueinander auf einer zumindest annähernd gemeinsamen Ebene;
b) Einfügen der Kugelrollen (4) in einer um 90° zu deren Betriebstellung verdrehten Stellung **durch** die Käfigtaschen (13) des Lagerkäfigs (7) hindurch in die Laufbahn (12) des inneren Lagerrings (3);
c) Verschwenken der Kugelrollen (4) innerhalb der Käfigtaschen (13) um deren Querachse (A_{KQ}) um 90° in eine liegende Stellung derart, dass deren Seitenflächen (5, 6) parallel zur Lagerlängsachse (A_{LL}) angeordnet sind;
d) Ineinanderfügen von äußerem Lagerring (2) und innerem Lagerring (3) mit Lagerkäfig (7) und Kugelrollen (4) in einer zumindest annähernd um 90° verdrehten Stellung der Lagerringe (2, 3) zueinander;
e) Zueinanderschwenken von äußerem Lagerring (2) und innerem Lagerring (3) mit Lagerkäfig (7) und Kugelrollen (4) um deren gemeinsame Lager-querachse (A_{LQ}), bis beide Lagerringe (2, 3) koaxial zueinander angeordnet sind;
f) Versetzen eines oder beider Lagerringe (2, 3) in eine Drehbewegung mit einer Drehzahl (n), bei der die Kugelrollen (4) **durch** Eigenrotation und **durch** Fliehkraft sich selbsttätig in ihre Betriebsstellung innerhalb der Laufbahnen (11, 12) der Lagerringe (2, 3) aufrichten.
g) Umbördeln der Käfigborde (16, 17) des Lagerkäfigs (7) in Richtung der Seitenflächen (5, 6) der Kugelrollen (4) zur Herstellung einer Führung zur Vermeidung eines Quertaumelns der Kugelrollen (4) sowie optionales Befetten und/oder Abdichten des Kugelrollenlagers (1).

9. Verfahren nach Anspruch 8, **dadurch gekennzeichnet, dass** die Verfahrensschritte d) und e) bei einem Kugelrollenlager gemäß Anspruch 1 und 2 wie folgt ausgeführt werden:
▪ Fixieren des äußeren Lagerrings (2) in einer senkrechten Stellung in einer Hilfsvorrichtung und Einsetzen des inneren Lagerrings (3) zusammen mit dem Lagerkäfig (7) und den Kugelrollen (4) in einer waagerechten Stellung in den äußeren Lagerring (2);
▪ Entgegengesetztes Verkippen der einerseits und andererseits des äußeren Lagerrings (2) angeordneten Kugelrollen (4) innerhalb der Laufbahn (12) des inneren Lagerrings (3) zu einer der Seitenflächen (18, 19) des inneren Lagerrings (3) in eine schräg angestellte Stellung;
▪ Verschwenken des inneren Lagerrings (3) zusammen mit dem Lagerkäfig (7) und den Kugelrollen (4) zum äußeren Lagerring (2) voran mit den Seitenflächen (18, 19) des inneren Lagerrings (3), zu denen die Kugelrollen (4) angestellt sind;
▪ Herstellen eines geringen radialen Versatzes des inneren Lagerrings (3) zum äußeren Lagerring (2) und Einschwenken des der Versatzrichtung entgegengesetzten Teils des inneren Lagerrings (3) zusammen mit dem Lagerkäfig (7) und den Kugelrollen (4) in den äußeren Lagerring (2);
▪ Absenken des bereits eingeschwenkten Teils des inneren Lagerrings (3) in den äußeren Lagerring (2) und Einschwenken des verbleibenden Teils des inneren Lagerrings (3) zusammen mit dem Lagerkäfig (7) und den Kugelrollen (4) in den äußeren Lagerring (2).

10. Verfahren nach Anspruch 8, **dadurch gekennzeichnet, dass** die Verfahrensschritte d) und e) bei einem Kugelrollenlager gemäß Anspruch 1 und 3 wie folgt ausgeführt werden:
▪ Fixieren des inneren Lagerrings (3) mit Lagerkäfig (7) und Kugelrollen (4) in einer waagerechten Stellung in einer Hilfsvorrichtung;
▪ Entgegengesetztes Verkippen der einerseits und andererseits der Lagerquerachse (A_{LQ}) angeordneten Kugelrollen (4) innerhalb der Laufbahn (12) des inneren Lagerrings (3) zu einer der Seitenflächen (18, 19) des inneren Lagerrings (3) in eine schräg angestellte Stellung;
▪ Aufschieben des äußeren Lagerrings (2) in einer senkrechten Stellung auf den inneren Lagerring (3) und Verschwenken des äußeren Lagerrings (2) zum inneren Lagerring (3) mit dem Lagerkäfig (7) und den Kugelrollen (4) in Richtung der abgesenkten Seiten der verkippten Kugelrollen (4).

11. Verfahren nach Anspruch 9 oder 10, **dadurch gekennzeichnet, dass** das Einfügen der Kugelrollen (4) in einer um 90° verdrehten Stellung in die Laufbahn (12) des inneren Lagerrings (3) durch die quer zur Umfangsrichtung angeordnete Querschnittskontur (15) der Käfigtaschen (13) erfolgt.

12. Verfahren nach Anspruch 9 oder 10, **dadurch gekennzeichnet, dass** beim Verschwenken der Kugelrollen (4) innerhalb der Käfigtaschen (13) in eine liegende Stellung deren Querachse (A_{KQ}) unterhalb der Ebene der Unterseite des Lagerkäfigs (7) angeordnet ist.

13. Verfahren nach Anspruch 9 oder 10, **dadurch gekennzeichnet, dass** das Ineinanderfügen der Lagerringe (2, 3) derart erfolgt, dass zunächst zwei diametral gegenüberliegend angeordnete Kugelrollen (4) mit der Laufbahn (12) des äußeren Lagerrings (2) in Kontakt treten.

14. Verfahren nach Anspruch 9 oder 10, **dadurch gekennzeichnet, dass** die zu den Seitenflächen (18, 19) des inneren Lagerrings (3) in eine schräge Stellung verkippten Kugelrollen (4) auf ihrer abgesenkten Seite etwa auf der Ebene der Oberseite des Lagerkäfigs (7) angeordnet sind.

15. Verfahren nach Anspruch 9, **dadurch gekennzeichnet, dass** der radiale Versatz des inneren Lagerrings (3) zum äußeren Lagerring (2) beim Einschwenken durch Anheben des inneren Lagerrings (3) in Richtung eines seiner noch außerhalb des äußeren Lagerrings (2) befindlichen Teile erfolgt.

16. Verfahren nach Anspruch 9, **dadurch gekennzeichnet, dass** das Absenken des bereits eingeschwenkten Teils des inneren Lagerrings (3) in den äußeren Lagerring (2) entgegensetzt der Richtung des noch nicht in Endstellung befindlichen Teils des inneren Lagerrings (3) erfolgt.

17. Verfahren nach Anspruch 9 oder 10, **dadurch gekennzeichnet, dass** die Kugelrollen (4) beim Versetzen des äußeren Lagerrings (2) in eine Drehbewegung mit den Randbereichen ihrer Laufflächen (8) in Kontakt mit den Randbereichen der Laufbahnen (11, 12) ihrer Lagerringe (2, 3) stehen.

## Claims

1. Ball roller bearing (1) consisting essentially of an outer bearing race (2) and an inner bearing race (3), and of a multiplicity of ball rollers (4), which are disposed between these bearing races (2, 3), which each have two side faces (5, 6) that are flattened symmetrically as a departure from a basic ball shape and are disposed parallel to one another, and which are held at uniform distances from one another in the circumferential direction by a bearing cage (7), the ball rollers (4) having between the side faces (5, 6) thereof a width (b_{K}) of approximately 70% of the diameter (d_{K}) of the basic ball shape thereof, and rolling with the bearing surfaces (8) thereof in two groove-shaped raceways (11, 12), which are machined into the inside (9) of the outer bearing race (2) and into the outside (10) of the inner bearing race (3) and the depth (t_{LA}, t_{LI}) of which is dimensioned in such a way that the distance (a_{L}) between the inside (9) of the outer bearing race (2) and the outside (10) of the inner bearing race (3) is less than the width (b_{K}) of the ball rollers (4), **characterized in that** the bearing cage (7) of the ball roller bearing (1) is designed as a window cage, the individual cage pockets (13) of which each have the integrated overall contour of a contour (14) disposed in the longitudinal direction relative to the circumferential direction and a contour (15) disposed in the transverse direction relative to the circumferential direction 15) of a cross section through a ball roller (4) arranged in a vertical rolling position, and are disposed spaced apart in such a way that the sum of the distances between the introduced ball rollers (4) at the pitch circle thereof is less than the diameter (d_{K}) of the basic ball shape of an individual ball roller (4), the contour (14) of the cage pockets (13) which is disposed longitudinally with respect to the circumferential direction having the shape of a section plane disposed above the central transverse axis (A_{KQ}) of a ball roller (4) and the contour (15) of the cage pockets (13) which is disposed transversely to the circumferential direction having the shape of a section plane disposed directly on the central transverse axis (A_{KQ}) of a ball roller (4).

2. Ball roller bearing as claimed in Claim 1, **characterized in that** the depth (t_{LA}, t_{LI}) of the groove-shaped raceways (11, 12) is the same in both bearing races (2, 3) and is about 17% to 25% of the diameter (d_{K}) of the basic ball shape of the ball rollers (4).

3. Ball roller bearing as claimed in Claim 1, **characterized in that** the depth (t_{LA}, t_{LI}) of the groove-shaped raceways (11, 12) is different in the two bearing races (2, 3) and is about 17% in the outer bearing race (2) and up to 30% in the inner bearing race (3) of the diameter (d_{K}) of the basic ball shape of the ball rollers (4).

4. Ball roller bearing as claimed in Claim 2 or 3, **characterized in that** the bearing cage (7) initially has a U-shaped profile cross section, the lateral profile webs of which are provided as cage rims (16, 17) for the purpose of avoiding transverse wobbling of the ball rollers (4).

5. Ball roller bearing as claimed in Claim 4, **characterized in that** the cage rims (16, 17) have a length such that the end edges thereof are disposed approximately at the level of the pitch circle of the ball roller bearing (1) after inward flanging toward the ball rollers (4), which concludes the assembly of the bearing.

6. Ball roller bearing as claimed in Claim 5, **characterized in that** the bearing cage (7) is produced from a sheet metal strip by profiling the cage rims (16, 17), punching the cage pockets (13), cutting to length to give the dimension of the circumference, rolling into a ring and welding the ends of the ring.

7. Ball roller bearing as claimed in Claim 2 or 3, **characterized in that** the assembled ball roller bearing (1) has a rolling element filling ratio of about 85% to 95% and its life is about 180% to 240%, based on a figure of 100% for the life of a deep groove ball bearing of the same construction.

8. Method for assembling a ball roller bearing having the features of Claim 1, **characterized by** cross/oblique/swivel assembly involving the inner bearing race (3), the bearing cage (7), the ball rollers (4) and the outer bearing race (2), having the following steps:
a) arranging the inner bearing race (3) and the bearing cage (7) of the ball roller bearing (1) in a concentric position relative to one another in an at least approximately common plane;
b) inserting the ball rollers (4) in a position turned through 90° relative to the operating position thereof through the cage pockets (13) of the bearing cage (7), into the raceway (12) of the inner bearing race (3);
c) swiveling the ball rollers (4) through 90° about the transverse axis (A_{KQ}) thereof within the cage pockets (13), into a horizontal position, such that the side faces (5, 6) thereof are disposed parallel to the bearing longitudinal axis (A_{LL});
d) fitting the outer bearing race (2) and the inner bearing race (3) with the bearing cage (7) and the ball rollers (4) one inside the other in a position of the bearing races (2, 3) in which said races are turned at least approximately through 90° relative to one another;
e) swiveling the outer bearing race (2) and the inner bearing race (3) with the bearing cage (7) and the ball rollers (4) relative to one another about their common bearing transverse axis (A_{LQ}) until both bearing races (2, 3) are disposed coaxially with respect to one another;
f) imparting a rotary motion to one or both of the bearing races (2, 3) with a rotational speed (n) at which the ball rollers (4) automatically right themselves into the operating position thereof within the raceways (11, 12) of the bearing races (2, 3) through rotating on themselves and through centrifugal force;
g) flanging of the cage rims (16, 17) of the bearing cage (7) in the direction of the side faces (5, 6) of the ball rollers (4) to produce a guide for the purpose of avoiding transverse wobbling of the ball rollers (4), and optional greasing and/or sealing of the ball roller bearing (1).

9. Method as claimed in Claim 8, **characterized in that** method steps d) and e) are carried out as follows on a ball roller bearing in accordance with Claim 1 and 2:
▪ fixing the outer bearing race (2) in a vertical position in an auxiliary device and inserting the inner bearing race (3) together with the bearing cage (7) and the ball rollers (4) in a horizontal position in the outer bearing race (2);
▪ tipping the ball rollers (4) disposed on one side and the other side of the outer bearing race (2) in opposite directions within the raceway (12) of the inner bearing race (3) into an obliquely tilted position relative to one of the side faces (18, 19) of the inner bearing race (3);
▪ swiveling the inner bearing race (3) together with the bearing cage (7) and the ball rollers (4) relative to the outer bearing race (2) with the side faces (18, 19) of the inner bearing race (3) in the lead, with respect to which the ball rollers (4) are tilted;
▪ producing a slight radial offset of the inner bearing race (3) relative to the outer bearing race (2) and swiveling that part of the inner bearing race (3) which is opposite the direction of offset, together with the bearing cage (7) and the ball rollers (4), into the outer bearing race (2);
▪ lowering that part of the inner bearing race (3) which has already been swiveled in into the outer bearing race (2) and swiveling the remaining part of the inner bearing race (3), together with the bearing cage (7) and the ball rollers (4), into the outer bearing race (2).

10. Method as claimed in Claim 8, **characterized in that** method steps d) and e) are carried out as follows on a ball roller bearing in accordance with Claim 1 and 3:
▪ fixing the inner bearing race (3) with the bearing cage (7) and the ball rollers (4) in a horizontal position in an auxiliary device;
▪ tipping the ball rollers (4) disposed on one side and the other side of the bearing transverse axis (A_{LQ}) in opposite directions within the raceway (12) of the inner bearing race (3) into an obliquely tilted position relative to one of the side faces (18, 19) of the inner bearing race (3);
▪ pushing the outer bearing race (2) in a vertical position onto the inner bearing race (3) and swiveling the outer bearing race (2) relative to the inner bearing race (3) with the bearing cage (7) and the ball rollers (4) in the direction of the lowered sides of the tipped ball rollers (4).

11. Method as claimed in Claim 9 or 10, **characterized in that** the ball rollers (4) are inserted in a position turned through 90° into the raceway (12) of the inner bearing race (3), through the cross-sectional contour (15) of the cage pockets (13) which is disposed transversely to the circumferential direction.

12. Method as claimed in Claim 9 or 10, **characterized in that** during the swiveling of the ball rollers (4) within the cage pockets (13), into a horizontal position, the transverse axis (A_{KQ}) thereof is disposed below the level of the underside of the bearing cage (7).

13. Method as claimed in Claim 9 or 10, **characterized in that** fitting of the bearing races (2, 3) one inside the other is performed in such a way that initially two diametrically opposite ball rollers (4) make contact with the raceway (11) of the outer bearing race (2).

14. Method as claimed in Claim 9 or 10, **characterized in that,** after being tipped into an oblique position relative to the side faces (18, 19) of the inner bearing race (3), the ball rollers (4) are disposed approximately at the level of the top side of the bearing cage (7) on their lowered side.

15. Method as claimed in Claim 9, **characterized in that** the radial offset of the inner bearing race (3) relative to the outer bearing race (2) during swiveling in is accomplished by raising the inner bearing race (3) in the direction of one of its parts still situated outside the outer bearing race (2).

16. Method as claimed in Claim 9, **characterized in that** that part of the inner bearing race (3) which has already been swiveled in is lowered into the outer bearing race (2) in the direction opposite to that of that part of the inner bearing race (3) which is not yet in the end position.

17. Method as claimed in Claim 9 or 10, **characterized in that,** while a rotary motion is being imparted to the outer bearing race (2), the ball rollers (4) are in contact by means of the boundary zones of their bearing surfaces (8) with the boundary zones of the raceways (11, 12) of their bearing races (2, 3).

## Revendications

1. Roulement à rouleaux sphériques (1) constitué essentiellement d'une bague de roulement extérieure (2) et d'une bague de roulement intérieure (3) ainsi que d'une pluralité de rouleaux sphériques (4) disposés entre ces bagues de roulement (2, 3), lesquels rouleaux sphériques présentent à chaque fois deux faces latérales (5, 6) aplaties symétriquement par rapport à une forme de base sphérique, disposées parallèlement l'une à l'autre et sont maintenus à distance uniforme les uns des autres dans une direction périphérique par une cage de roulement (7), les rouleaux sphériques (4) présentant entre leurs faces latérales (5, 6) une largeur (b_{K}) d'environ 70 % du diamètre (d_{K}) de leur forme de base sphérique et roulant avec leurs surfaces de roulement (8) dans deux pistes de roulement en forme de rainure (11, 12) pratiquées dans le côté intérieur (9) de la bague de roulement extérieure (2) et dans le côté extérieur (10) de la bague de roulement intérieure (3), dont la profondeur (t_{LA}, t_{LI}) est dimensionnée de telle sorte que la distance (a_{L}) entre le côté intérieur (9) de la bague de roulement extérieure (2) et le côté extérieur (10) de la bague de roulement intérieure (3) soit inférieure à la largeur (b_{K}) des rouleaux sphériques (4), **caractérisé en ce que** la cage de roulement (7) du roulement à rouleaux sphériques (1) est réalisée sous forme de cage à fenêtres dont les cavités de cage individuelles (13) présentent à chaque fois le contour total intégré d'un contour (14) disposé longitudinalement par rapport à la direction périphérique et d'un contour (15) disposé transversalement par rapport à la direction périphérique d'une section transversale à travers un rouleau sphérique (4) disposé dans une position de rouleau verticale, et sont disposées de manière espacée les unes par rapport aux autres de telle sorte que la somme des distances des rouleaux sphériques introduits (4) sur leur cercle partiel soit inférieure au diamètre (d_{K}) de la forme de base sphérique d'un rouleau sphérique individuel (4), le contour (14) des cavités de cage (13), disposé longitudinalement par rapport à la direction périphérique, présentant la forme d'un plan de coupe disposé au-dessus de l'axe médian transversal (A_{KQ}) d'un rouleau sphérique (4) et le contour (15) des cavités de cage (13), disposé transversalement par rapport à la direction périphérique, présentant la forme d'un plan de coupe disposé directement sur l'axe médian transversal (A_{KQ}) d'un rouleau sphérique (4).

2. Roulement à rouleaux sphériques selon la revendication 1, **caractérisé en ce que** la profondeur (t_{LA}, t_{LI}) des pistes de roulement en forme de rainure (11, 12) dans les deux bagues de roulement (2, 3) est égale et vaut environ 17 % à 25 % du diamètre (d_{K}) de la forme de base sphérique des rouleaux sphériques (4).

3. Roulement à rouleaux sphériques selon la revendication 1, **caractérisé en ce que** la profondeur (t_{LA}, t_{LI}) des pistes de roulement en forme de rainure (11, 12) dans les deux bagues de roulement (2, 3) est différente et vaut, dans la bague de roulement extérieure (2), environ 17 % et, dans la bague de roulement intérieure (3), jusqu'à 30 % du diamètre (d_{K}) de la forme de base sphérique des rouleaux sphériques (4).

4. Roulement à rouleaux sphériques selon la revendication 2 ou 3, **caractérisé en ce que** la cage de roulement (7) présente initialement une section transversale profilée en forme de U dont les branches profilées latérales sont prévues sous forme de bords de cage (16, 17) pour éviter une nutation transversale des rouleaux sphériques (4).

5. Roulement à rouleaux sphériques selon la revendication 4, **caractérisé en ce que** les bords de cage (16, 17) présentent une longueur telle que leurs arêtes d'extrémité soient disposées après un bordage terminant le montage du roulement vers les rouleaux sphériques (4) approximativement à la hauteur du cercle partiel du roulement à rouleaux sphériques (1).

6. Roulement à rouleaux sphériques selon la revendication 5, **caractérisé en ce que** la cage de roulement (7) est fabriquée à partir d'une bande de tôles par profilage des bords de cage (16, 17), estampage des cavités de cage (13), découpage correspondant à la dimension périphérique, enroulement pour former une bague et soudage des extrémités de bague.

7. Roulement à rouleaux sphériques selon la revendication 2 ou 3, **caractérisé en ce que** le roulement à rouleaux sphériques monté (1) présente un degré de remplissage de corps de roulement d'environ 85 % à 95 % et sa durée de vie, partant d'une durée de vie de 100 % pour un roulement rainuré à billes de construction similaire, vaut environ 180 % à 240 %.

8. Procédé de montage d'un roulement à rouleaux sphériques comprenant les caractéristiques de la revendication 1, **caractérisé par** un montage pivotant croisé-oblique entre la bague de roulement intérieure (3), la cage de roulement (7) et les rouleaux sphériques (4) ainsi que la bague de roulement extérieure (2), comprenant les étapes suivantes :
a) disposition de la bague de roulement intérieure (3) et de la cage de roulement (7) du roulement à rouleaux sphériques (1) dans une position concentrique l'une par rapport à l'autre sur un plan au moins approximativement commun ;
b) introduction des rouleaux sphériques (4) dans une position tournée de 90° par rapport à leur position fonctionnelle à travers les cavités de cage (13) de la cage de roulement (7) dans la piste de roulement (12) de la bague de roulement intérieure (3) ;
c) pivotement des rouleaux sphériques (4) à l'intérieur des cavités de cage (13) autour de leur axe transversal (A_{KQ}) de 90° dans une position couchée de telle sorte que leurs faces latérales (5, 6) soient disposées parallèlement à l'axe longitudinal du roulement (A_{LL}) ;
d) assemblage l'une dans l'autre de la bague de roulement extérieure (2) et de la bague de roulement intérieure (3) avec la cage de roulement (7) et les rouleaux sphériques (4) dans une position des bagues de roulement (2, 3) l'une par rapport à l'autre au moins approximativement tournée de 90° ;
e) pivotement l'une par rapport à l'autre de la bague de roulement extérieure (2) et de la bague de roulement intérieure (3) avec la cage de roulement (7) et les rouleaux sphériques (4) autour de leur axe transversal de roulement commun (A_{LQ}) jusqu'à ce que les deux bagues de roulement (2, 3) soient disposées coaxialement l'une par rapport à l'autre ;
f) décalage de l'une ou des deux bagues de roulement (2, 3) dans un mouvement de rotation à une vitesse de rotation (n), à laquelle les rouleaux sphériques (4) s'orientent automatiquement par leur propre rotation et par la force centrifuge dans leur position fonctionnelle à l'intérieur des pistes de roulement (11, 12) des bagues de roulement (2, 3) ;
g) bordage des bords de cage (16, 17) de la cage de roulement (7) dans la direction des faces latérales (5, 6) des rouleaux sphériques (4) pour établir un guide pour éviter une nutation transversale des rouleaux sphériques (4) avec graissage et/ou scellage optionnels du palier à rouleaux sphériques (1).

9. Procédé selon la revendication 8, **caractérisé en ce que** les étapes de procédé d) et e) sont réalisées comme suit dans le cas d'un roulement à rouleaux sphériques selon les revendications 1 et 2 :
- fixation de la bague de roulement extérieure (2) dans une position verticale dans un dispositif auxiliaire et insertion de la bague de roulement intérieure (3) conjointement avec la cage de roulement (7) et les rouleaux sphériques (4) dans une position horizontale dans la bague de roulement extérieure (2) ;
- basculement opposé des rouleaux sphériques (4) disposés de part et d'autre de la bague de roulement extérieure (2) à l'intérieur de la piste de roulement (12) de la bague de roulement intérieure (3) vers l'une des faces latérales (18, 19) de la bague de roulement intérieure (3) dans une position inclinée obliquement ;
- pivotement de la bague de roulement intérieure (3) conjointement avec la cage de roulement (7) et les rouleaux sphériques (4) par rapport à la bague de roulement extérieure (2) vers l'avant avec les faces latérales (18, 19) de la bague de roulement intérieure (3) vers lesquelles les rouleaux sphériques (4) sont inclinés ;
- établissement d'un faible décalage radial de la bague de roulement intérieure (3) par rapport à la bague de roulement extérieure (2) et pivotement vers l'intérieur de la partie de la bague de roulement intérieure (3) opposée à la direction de décalage conjointement avec la cage de roulement (7) et les rouleaux sphériques (4) dans la bague de roulement extérieure (2) ;
- abaissement de la partie déjà pivotée vers l'intérieur de la bague de roulement intérieure (3) dans la bague de roulement extérieure (2) et pivotement vers l'intérieur de la partie restante de la bague de roulement intérieure (3) conjointement avec la cage de roulement (7) et les rouleaux sphériques (4) dans la bague de roulement extérieure (2).

10. Procédé selon la revendication 8, **caractérisé en ce que** les étapes de procédé d) et e) sont réalisées comme suit dans le cas d'un roulement à rouleaux sphériques selon les revendications 1 et 3 :
- fixation de la bague de roulement intérieure (3) avec la cage de roulement (7) et les rouleaux sphériques (4) dans une position horizontale dans un dispositif auxiliaire ;
- basculement opposé des rouleaux sphériques (4) disposés de part et d'autre de l'axe transversal de roulement (A_{LQ}) à l'intérieur de la piste de roulement (12) de la bague de roulement intérieure (3) vers l'une des faces latérales (18, 19) de la bague de roulement intérieure (3) dans une position inclinée obliquement ;
- poussée de la bague de roulement extérieure (2) dans une position verticale sur la bague de roulement intérieure (3) et pivotement de la bague de roulement extérieure (2) par rapport à la bague de roulement intérieure (3) avec la cage de roulement (7) et les rouleaux sphériques (4) dans la direction des côtés abaissés des rouleaux sphériques basculés (4).

11. Procédé selon la revendication 9 ou 10, **caractérisé en ce que** l'insertion des rouleaux sphériques (4) dans une position tournée de 90° dans la piste de roulement (12) de la bague de roulement intérieure (3) s'effectue par le contour en section transversale (15) des cavités de cage (13) disposé transversalement par rapport à la direction périphérique.

12. Procédé selon la revendication 9 ou 10, **caractérisé en ce que** lors du pivotement des rouleaux sphériques (4) à l'intérieur des cavités de cage (13) dans une position couchée, leur axe transversal (A_{KQ}) est disposé en dessous du plan du côté inférieur de la cage de roulement (7).

13. Procédé selon la revendication 9 ou 10, **caractérisé en ce que** l'assemblage l'une dans l'autre des bagues de roulement (2, 3) s'effectue de telle sorte que deux rouleaux sphériques (4) disposés de manière diamétralement opposée viennent d'abord en contact avec la piste de roulement (11) de la bague de roulement extérieure (2).

14. Procédé selon la revendication 9 ou 10, **caractérisé en ce que** les rouleaux sphériques (4) basculés vers les faces latérales (18, 19) de la bague de roulement intérieure (3) dans une position oblique sont disposés sur leur côté abaissé approximativement sur le plan du côté supérieur de la cage de roulement (7).

15. Procédé selon la revendication 9, **caractérisé en ce que** le décalage radial de la bague de roulement intérieure (3) par rapport à la bague de roulement extérieure (2) s'effectue lors du pivotement vers l'intérieur par soulèvement de la bague de roulement intérieure (3) dans la direction de l'une de ses parties se trouvant encore à l'extérieur de la bague de roulement extérieure (2).

16. Procédé selon la revendication 9, **caractérisé en ce que** l'abaissement de la partie déjà pivotée vers l'intérieur de la bague de roulement intérieure (3) dans la bague de roulement extérieure (2) s'effectue à l'opposé de la direction de la partie de la bague de roulement intérieure (3) ne se trouvant pas encore dans la position d'extrémité.

17. Procédé selon la revendication 9 ou 10, **caractérisé en ce que** les rouleaux sphériques (4), lors du décalage de la bague de roulement extérieure (2) dans un mouvement de rotation avec les régions de bord de leurs surfaces de roulement (8), sont en contact avec les régions de bord des pistes de roulement (11, 12) de leurs bagues de roulement (2, 3).
